(19) Europäisches Patentamt
European Patent Office
Office européen des brevets

(11) **EP 4 165 798 B1**

(12) **EUROPEAN PATENT SPECIFICATION**

(45) Date of publication and mention
of the grant of the patent:
**26.07.2023 Bulletin 2023/30**

(21) Application number: **21772782.5**

(22) Date of filing: **03.09.2021**

(51) International Patent Classification (IPC):
**H04B 7/185** (2006.01)

(52) Cooperative Patent Classification (CPC):
**H04B 7/18506**

(86) International application number:
**PCT/EP2021/074355**

(87) International publication number:
**WO 2023/030640 (09.03.2023 Gazette 2023/10)**

(54) **AIRCRAFT COLLISION AVOIDANCE METHOD AND DEVICE**

VERFAHREN UND VORRICHTUNG ZUR VERMEIDUNG VON FLUGZEUGKOLLISIONEN

PROCÉDÉ ET DISPOSITIF D'ÉVITEMENT DE COLLISION D'AÉRONEF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.04.2023 Bulletin 2023/16**

(73) Proprietor: **Flarm Technology AG
6330 Cham (CH)**

(72) Inventors:
• **MÄDER, Urban
8925 Ebertswil (CH)**
• **PASQUIER, Jérôme
8152 Opfikon (CH)**
• **GRÖGER, Friedolin Marvin
6300 Zug (CH)**
• **KAUFMANN, Thomas
8908 Hedingen (CH)**

(74) Representative: **E. Blum & Co. AG
Patent- und Markenanwälte VSP
Vorderberg 11
8044 Zürich (CH)**

(56) References cited:
**US-A1- 2017 318 213      US-A1- 2019 149 322**

• **BERTHIER PAUL ET AL: "SAT : Security in the
air using Tesla", 2017 IEEE/AIAA 36TH DIGITAL
AVIONICS SYSTEMS CONFERENCE (DASC),
IEEE, 17 September 2017 (2017-09-17), pages
1-10, XP033248848, DOI:
10.1109/DASC.2017.8102003 [retrieved on
2017-11-08]**

## Description

Technical Field

The invention relates to a device, method, and system for wirelessly broadcasting information pertaining to an aircraft for traffic awareness and collision avoidance.

Background Art

Every year, a substantial number of VFR (visual flight rules) aircraft are involved in mid-air collisions. Unfortunately, half of these incidents are fatal. Surprisingly, most of these accidents happen in good visibility and during daylight conditions.

Accident investigations have shown that the VFR-principle of "see and avoid" is insufficient, as it is often nearly impossible to see the other aircraft. The human visual system is not well suited for objects on a collision course, because these are on a fixed vector from the aircraft, i.e. the image of a foreign aircraft does not "move" on the pilot's retina. Other biological, physiological, and psychological effects ("human factors") as well as limited cockpit visibility in a typical General Aviation aircraft further decrease the chance of seeing the other aircraft early enough to avoid a mid-air collision.

Traditional FLARM as well as newer PowerFLARM devices (see, e.g. https://flarm.com/wp-content/uploads/man/FLARM-General-EN.pdf as accessed on 2021-02-05) work by calculating and broadcasting their own future flight paths to nearby aircraft together with a unique identifier. At the same time, they receive the future flight paths from surrounding aircraft. All these values are stored in broadcasted data packets. Then, an intelligent motion prediction algorithm calculates a collision risk for each aircraft. When a collision probability exceeds a threshold, the pilots are alerted with the relative position of the other aircraft, enabling them to avoid the collision.

Besides issuing collision warnings, FLARM devices can also show nearby aircraft on an overview screen showing surrounding airspace. This helps pilots to detect the other aircraft and perform an evasive maneuver before a collision warning becomes necessary.

US 2019/0149322 A1 relates to a secure system for the identification of aerial vehicles.

US 2017/0318213 A1 discloses an information communication method for obtaining information from a subject using a terminal device that includes an image sensor.

BERTHIER PAUL et al.: "SAT: Security in the air using Tesla", 2017 IEEE/AIAA 36TH DIGITAL AVIONICS SYSTEMS CONFERENCE (DASC), IEEE, 17 September 2017, pages 1-10 deals with the increase of data security of ADS-B.

However, at least some of these state of the art devices have the disadvantage that they can create privacy and/or security concerns, in particular for aircraft involved in national security duties, e.g. police helicopters or military aircraft, or for commercial activities.

Disclosure of the Invention

The problem to be solved by the present invention is therefore to at least in part overcome these shortcomings of prior art solutions while still providing reliable collision avoidance functionality.

This problem is solved by the devices and methods of the independent claims.

Accordingly, a broadcast device for wirelessly broadcasting information pertaining to a first aircraft comprises a positioning device (e.g. a GNSS receiver such as a GPS receiver, a GLONASS receiver, and/or a Galileo receiver) configured to determine a position P1 of the broadcast device or - if the broadcast device is mounted to, affixed at, or situated in or at the aircraft or a pilot onboard the aircraft - of the aircraft. The position P1 advantageously comprises a latitude, a longitude and an altitude. The position P1 can optionally at least in part be determined and/or enhanced from on-board navigational systems of the aircraft such as a barometric pressure sensor, a magnetic sensor, an acceleration sensor, an inertial navigation system, etc., e.g. to increase the altitude precision which can be rather poor for typical GNSS devices without correction. In such a case, the combined GNSS receiver together with the additional sensor/system as well as any data fusion logics involved qualifies as "positioning device" according to the invention.

The broadcast device further comprises a control unit (such as a microcontroller with a memory) which is configured to receive the position P1 from the positioning device, preferably via an internal bus such as a serial or an I2C bus. Thus, the control unit can further process the position P1, e.g. add it to a to-be-broadcasted data packet (see below). In addition, the control unit is configured to (advantageously repeatedly, see below) generate, at a time $T_k$ with k being a positive, non-zero natural number (i.e. k=1, 2, 3, ...) with $T_{k+1} > T_k$, a current identifier $ID1_k$ of the broadcast device. Thus, data packets broadcasted from the broadcast device (see below) can, by means of a receiver of the data packet, be assigned to a single broadcast device and used for calculating collision probabilities at the receiver's end. The current identifier $ID1_k$ is based on a randomly obtained number $RON_{k-1}$ (please note the index-shift here, i.e. $RON_{k-1}$

which is advantageously generated at a time $T_{k-1}$, see below, is used for generating $ID1_k$ at the time $T_k$) and it is based on a previous identifier $ID1_{k-1}$ of the broadcast device as previously, i.e. at a prior time $T_{k-1}$ (i.e. before the time $T_k$), generated by the control unit of the broadcast device.

In other words, at the prior time $T_{k-1}$ (e.g. in the past), the control unit has computed a previous identifier $ID1_{k-1}$. Then, at the time $T_k$ (e.g. now), the control unit generates the current identifier $ID1_k$ as a function of the randomly obtained number $RON_{k-1}$ and of the previous identifier $ID1_{k-1}$: $ID1_k = f(RON_{k-1}, ID1_{k-1})$.

Please note that for the first run, i.e. on device startup, for generating the first current identifier $ID1_1$ the previous identifier $ID1_0$ can be a fixed value stored in the device's firmware, it can be randomly generated, or it can be a combination thereof.

According to the invention, the control unit is further configured to generate a data packet D1 based on the received position P1 and based on the generated current identifier $ID1_k$ The term "based on" is to be understood in such a way that the position P1 and the current identifier $ID1_k$ or values indicative thereof are comprised in the data packet D1.

Note that further information can optionally be determined by the positioning device and/ or generated by the control unit, e.g. ground speed, course/track, climb rate, acceleration, turn rate, movement mode, horizontal position accuracy, vertical position accuracy, velocity accuracy, a future flight trajectory, e.g. as computed from the current position P1 and velocity and/ or acceleration and/ or wind vectors, etc. This further information or values indicative thereof can then be added to the data packet D1 which improves the calculation of collision probabilities and/or situational awareness.

According to the invention, the broadcast device further comprises a radio transmitter which is configured to receive the generated data packet D1 from the control unit, e.g. via an internal bus such as an I2C or a serial bus. The data packet D1 is indicative of the to-be-broadcasted information pertaining to the first aircraft (at least when the broadcast device is mounted to, affixed at, or situated in or at the aircraft or a pilot onboard the aircraft) and it is wirelessly broadcasted by the radio transmitter, e.g. to ground based receiver stations and/ or to adjacent aircraft. Thus, a receiver of the data packet D1 can reconstruct the position P1 and - using these values - e.g. calculate a collision probability and - based thereon - putatively issue a warning to the pilot. This enhances the safety of the aircraft(s) and/or overall situational awareness.

Advantageously, the broadcast device (e.g. its control unit) is configured to, at a later time $T_{k+1}$ (i.e. after the time $T_k$ as discussed above), generate an updated current identifier $ID1_{k+1}$ of the broadcast device. This updated current identifier is based on an updated randomly obtained number $RON_k$ (which is in general different to $RON_{k-1}$) and it is based on the previous identifier $ID1_k$ as previously (in this example at the time $T_k$) generated by the control unit. In other words, the previous identifier $ID1_k$ immediately precedes the to-be-created, updated current identifier $ID1_{k+1}$. The term "immediately precedes" is to be understood in a way that for the generation of the updated current identifier $ID1_{k+1}$, the previous identifier $ID1_k$ (i.e. the one immediately preceding the current one) is used: $ZD1_{k+1} = f(RON_k, ID1_k)$. In other words, while the updated current identifier $ID1_{k+1}$ has the same structure as the previous identifier $ID1_k$, its contents has changed, which makes it appear random such that the updated current identifier $ID1_k$ cannot be easily inferred from the previous identifier $ID1_{k+1}$, or vice-versa, unless $RON_k$ is also known. This is due to the randomly obtained number $RON_k$ being combined with the previous identifier $ID1_k$. This enhances privacy.

Therefore, the updated current identifier $ID1_{k+1}$ is not static such as a license plate on a car but it changes with each of its generations (due to the changing randomly obtained number $RON_k$ contributing to the updated current identifier $ID1_{k+1}$). This leads to enhanced privacy because a receiver which has missed one or more packets (e.g. due to the aircraft flying out of range) cannot easily reconstruct the chain of identifiers and thus assign the received data packets to a single broadcast device. This is due to (1) computational feasibility at the receiver's end since it has to guess the correct randomly obtained number(s) that it missed by trial and error, which is demanding especially when tracking a large number of senders, e.g. in a wide-area network, and/or when limited processing power is available, as is often the case in embedded (on-board) systems; and due to (2) ambiguity, i.e. when the number of random bits added (i.e. the amount of randomness introduced by each RON times the number of missed ID-updates) approaches the number of total bits of the identifiers, the ambiguity increases to the point where a unique reconstruction is no longer possible.

Then, the generated updated current identifier $ID1_{k+1}$ is used for generating an updated data packet D1. This updated data packet D1 is then broadcasted by the radio transmitter. Please note that the position P1 can and in general will change independently of the update of ID1, e.g. at a higher update frequency. This will be discussed below.

As a result of the updates of the identifier, privacy is enhanced because a receiver which has missed one or more updates of ID1 (e.g. due to the aircraft flying out of range) cannot easily reconstruct the change of identifiers and thereby assign the received data packets to a single broadcast device.

Then, in another preferred embodiment, the broadcast device (e.g. the control unit) is configured to, at each time $T_n$ with n being a positive, non-zero natural number (i.e. n = 1,2,3,...) repeatedly generate the updated current identifier $ID1_n$ of the broadcast device. The updated current identifier $ID1_n$ which is generated (or "valid") for the respective time $T_n$ is then used for generating and broadcasting the updated data packet D1. This leads to enhanced privacy because a receiver which has missed one or more packets (e.g. due to the aircraft flying out of range) cannot easily reconstruct the change of identifiers and thus assign the received data packets to a single broadcast device.

Advantageously, any time interval $\Delta T_n = T_n - T_{n-1}$ between generations of two consecutive updated current identifiers $ID1_{n-1}$ and $ID1_n$ (and consequently the generation and broadcasting of an updated data packet D1) is between 1 s and 60 s, in particular is between 2 s and 10 s, and in particular is 10 s.

Please note that $\Delta T_n$ can be a fixed constant or varying, i.e. the time intervals between each change of identifiers can or cannot change. In other words, regular or irregular update frequencies are possible.

Please further note that for the sake of clarity, the index "k" as used above for $T_k$, $ID1_k$, $RON_{k-1}$, $ID1_{k-1}$, etc. shall relate to a single, specific point in time ($T_k$) and its surroundings ($T_{k-1}$, $T_{k+1}$) while the index "n" as used here shall relate to the entire set of Ts, ID1s, RONs, etc.

In another advantageous embodiment, the broadcast device is configured to, at each time $T_n$ with n being a positive, non-zero natural number, for generating the respective current identifier $ID1_n$, apply a cryptographic hash function, in particular for (e.g. deterministically) mapping the respective randomly obtained number $RON_{n-1}$ and the respective previous identifier $ID1_{n-1}$ to the respective updated identifier $ID1_n$.

The cryptographic hash function is advantageously based on at least one bitshifting and/ or (e.g. a bitwise) XOR operation. This leads to a computationally efficient way of generating the current identifier. It has a further advantage that even small (e.g. bitwise) variations in the RON lead to large, apparently random and uncorrelated variations in the to-be-created current identifier ID1. This ensures that there is no apparent correlation between e.g. $ID1_n$ and $ID1_{n+1}$ unless $RON_n$ is also known.

Advantageously, the broadcast device is configured to, at each time $T_n$ with n being a positive, non-zero natural number, for generating the respective current identifier $ID1_n$, randomly select the respective randomly obtained number $RON_{n-1}$ which is used for generating the respective current identifier $ID1_n$ at the respective time $T_n$ from a predefined finite set of numbers. Thus, a computationally more efficient look-up-table approach can be used.

In another preferred embodiment of the invention, the broadcast device is configured to, at each time $T_n$ with n being a positive, non-zero natural number, for generating the respective current identifier $ID1_n$, select the respective randomly obtained number $RON_{n-1}$ which is used for generating the respective current identifier $ID1_n$ at the respective time $T_n$ from a range of 0 to ($2^{N_e}-1$) with $N_e$ being a positive, non-zero natural number. Advantageously, $N_e$ is selected from a range of 2 to 8, and in particular $N_e$ is 2. Thus, the amount of randomness which is added to the current identifier with each of its regenerations due to the RON can be tuned between more privacy (i.e. a larger $N_e$) and a more consistent trackability even in the event of missed data packets (i.e. a smaller $N_e$).

In a preferred embodiment, the broadcast device further comprises a (e.g. pseudo) random number generator which is configured to generate the randomly obtained number $RON_{n-1}$ used for generating the respective current identifier $ID1_n$. This can be done at each time $T_n$ with n being a positive, non-zero natural number (i.e. rightly before $ID1_n$ is generated) but it is advantageously done at each time $T_{n-1}$ (i.e. one time step before) and stored in memory (see below). Advantageously, the broadcast device is configured to initialize this random number generator based on at least one of the group of

- at least a part of the position P1 as determined by the positioning device,
- a timestamp, e.g. as available from the positioning device (e.g. GPS device), and
- a value derived from a sensor (e.g. an accelerometer) of the broadcast device.

Thus, the randomly obtained number $RON_{n-1}$ is at least indirectly influenced by a value of some physical environment attribute that is constantly changing in a manner that it is practically impossible to model.

Preferably, the broadcast device is configured to generate the data packet D1 in such a way that it comprises a header section and a payload section. In particular the header section is non-encrypted and/or the payload section is encrypted, e.g. by means of a symmetric or an asymmetric (e.g. public/private key) cryptographic algorithm. Thus, parts of the data packet D1 can be received and read by anyone while other parts of the packet can only be read by authorized receivers. This enhances security.

Then, advantageously, the payload section of the data packet D1 is encrypted by means of a symmetric cryptographic algorithm (e.g. AES with a key size of, e.g. 128 bits) and, in particular, the broadcast device is configured to use a cryptographic nonce based on the header section of the data packet D1, based on a time stamp, and based on a secret constant for encrypting the payload section of the data packet D1. Thus, security is further enhanced, because, e.g. the cryptographic nonce contains the changing time stamp and the variable data packet header which renders replay attacks not feasible.

Advantageously, the broadcast device or a or the random number generator thereof (see above) is configured to, at each time $T_n$ with n being a positive, non-zero natural number, generate a subsequent randomly obtained number $RON_n$ which is used for generating the subsequent current identifier $ID1_{n+1}$ of the broadcast device at a later time $T_{n+1}$. This makes it possible to generate the randomly obtained number RON one time step in advance and, e.g. store it in a memory for later usage.

In another preferred embodiment, the broadcast device is configured to, at each time $T_n$ with n being a positive, non-zero natural number, generate the data packet D1 in such a way that it comprises (in particular in an, e.g. non-encrypted, header section of the data packet D1) the current identifier $ID1_n$ and a subsequent randomly obtained number $RON_n$ which is subsequently, at a time $T_{n+1}$, used for generating a subsequent updated current identifier $ID1_{n+1}$ of the broadcast device. This makes it possible for a receiver to precompute an expected $ID1_{n+1}$ based on the received $ID1_n$ and $RON_n$ and store this information in a memory and later, at the time $T_{n+1}$, assign a received data packet D1 to a single broadcast device when its identifier has changed from $ID1_n$ to $ID1_{n+1}$. This enhances trackability and reduces computational complexity for the receiver, at least in the nominal case where the receiver does not miss any ID1-update.

As an alternative to this, the broadcast device is advantageously configured to, at each time $T_n$ with n being a positive, non-zero natural number, generate the data packet D1 in such a way that it comprises (in particular in an, e.g. non-encrypted, header section of the data packet D1) the current identifier $ID1_n$ and the randomly obtained number $RON_{n-1}$ which was used for generating the current identifier $ID1_n$ of the broadcast device at the time $T_n$. This makes it possible for a receiver to - by looking at its received ID 1-history - assign a received data packet to a single broadcast device when its identifier has changed. This enhances trackability.

In yet another preferred embodiment, the broadcast device is configured to generate the data packet D1 in such a way that it comprises at least one of

- a timestamp, in particular in the (e.g. encrypted) payload section of the data packet,
- a packet protocol version, in particular in the (e.g. non-encrypted) header section of the data packet, and
- a maximum supported packet protocol version, in particular in the (e.g. non-encrypted) header section of the data packet.

This makes it possible to implement additional features, e.g. for enhancing protocol compatibility between different devices with putatively varying computational resources.

In an advantageous embodiment of the invention, the broadcast device is configured to,

- repeatedly determine an updated position P1 of the broadcast device by means of the positioning device, and
- repeatedly generate and broadcast an updated data packet D1 based on this updated position P1 and based on the current identifier ID1 which is currently valid. In particular, any time interval between two of such consecutive updates (i.e. determining the updated position P 1, generating the updated data packet D1 based on the updated position P 1 and based on the current identifier ID1 which is currently valid, i.e. at the time of determining the updated position P 1, and broadcasting the updated data packet D1) is between 0.1 s and 5 s, in particular is between 0.5 s and 1 s, and in particular is 1 s.

As an example, the position P1 is determined once a second (i.e. once every time frame with a duration of 1 s) and two data packets are sent per time frame relying on the same position P1 (i.e. one data packet in every transmit-window of 0.5 s duration), i.e. at a frequency of 2 Hz. For all of these data packets, the identifier ID 1 remains constant for 10 s. The broadcast device then changes it identifier ID 1 after 10 s. For these next 10 s, the position P1 is determined again at 1 Hz and data packets are sent based on the currently valid position and based on the changed identifier at a nominal transmit rate of 2 Hz. Then, after another 10 s, the identifier changes again with position updates taking place every 1 s. Thus, fast changing positions P1 of the aircraft can be better taken into account while the identifiers are updated at a lower frequency, in this example at 0.1 Hz. This makes it possible to more precisely track an aircraft. Please note that both time intervals (i.e. the one for position updates and the one for identifier updates) can be fixed or variable independently from each other, i.e. they do not need to be constant over time.

In another preferred embodiment of the invention, the broadcast device further comprises a radio receiver (or a combined radio transceiver for broadcasting and receiving data packets) which is configured to receive a foreign data packet D2 as broadcasted from a foreign broadcast device. The foreign data packet D2 is, similarly to the first data packet D1 as discussed above, indicative of information pertaining to a second aircraft, at least when mounted to, affixed at, or situated in or at the second aircraft or a pilot onboard the second aircraft.

Then, advantageously, the broadcast device is configured to calculate a collision probability between the first aircraft and the second aircraft and/or provide information improving situational awareness, e.g. by taking the aircraft positions as comprised in the first and second data packets into account. In general, the situation is assessed based on the information pertaining to the first aircraft which is available to the broadcast device (own information) and based on the received information pertaining to the second aircraft (foreign information). Preferably, a collision warning is then issued to the pilot when the collision probability exceeds a certain threshold which helps to decreases the risk of a mid-air collision.

In another advantageous embodiment, the broadcast device is configured to generate the data packet D1 in such a way that it comprises a pair c = (e, m) with an exponent e being a natural number and with a mantissa m being a natural number. This pair or code point c is indicative of a value v (e.g. including a rounding of the value v), which can be a floating point or a natural number. The mantissa m has a bit width of $N_m$ (e.g. 7) and the exponent e has a bit width of $N_e$ (e.g. 2). Then, $v = 2^e * (2^{Nm} + m) - 2^{Nm}$. According to the invention, the bit widths $N_m$ and $N_e$ are selected such that a total bit width $N=N_e+N_m$ of the pair c is smaller than a total bit width of the value v. Thus, bandwidth is saved.

As another aspect of the invention, a method for, by means of a broadcast device, in particular as discussed above with regard to the first aspect of the invention, wirelessly broadcasting information pertaining to a first aircraft comprises steps of

- providing the broadcast device comprising a positioning device, a control unit, and a radio transmitter, advantageously mounted or mountable to, affixed or affixable at, or situated or situatable in or at the first aircraft or a pilot onboard the first aircraft, and
- by means of the positioning device (e.g. a GNSS receiver such as a GPS receiver, a GLONASS receiver, a Galileo receiver and/or a combined positioning device taking into account information from onboard navigational systems, see above) determining a position P1 (advantageously comprising a latitude, a longitude and an altitude) of the broadcast device.

The method comprises a further step of, by means of the control unit, receiving the position P1 as determined by the positioning device, preferably via an internal bus such as a serial or an I2C bus. Thus, the control unit can further process the position P1, e.g. add it to a to-be-broadcasted data packet (see below).

Then, at a time $T_k$ (e.g. now) with k being a positive, non-zero natural number (i.e. k=1, 2, 3, ...) with $T_{k+1} > T_k$, a current identifier $ID1_K$ of the broadcast device is generated by means of the control unit based on a randomly obtained number $RON_{k-1}$ and it is based on a previous identifier $ID1_{k-1}$ as previously (e.g. in the past, before the time $T_k$), at a prior time $T_{k-1}$, generated by the control unit.

Subsequently, a data packet D1 based on the received position P1 and based on the generated current identifier $ID1_k$ is generated by the control unit. The term "based on" is to be understood in such a way that the position P1 and the current identifier $ID1_k$ or values indicative thereof are comprised in the data packet D1. Thus, data packets broadcasted from the broadcast device (see below) can, by means of a receiver of the data packet, be assigned to a single broadcast device and used for calculating collision probabilities at the receiver's end.

Please note that further information can optionally be determined by the positioning device and/ or generated by the control unit, e.g. ground speed, course/track, climb rate, acceleration, turn rate, movement mode, horizontal position accuracy, vertical position accuracy, velocity accuracy, a future flight trajectory as computed from the current position P1 and velocity and/or acceleration and/ or wind vectors, etc. These further information or values indicative thereof can then be added to the data packet D1 which improves the calculation of collision probabilities and/or situational awareness.

According to the invention, the method comprises a further step of:

- by means of the radio transmitter receiving the generated data packet D1 (e.g. via an internal bus) and wirelessly broadcasting the received data packet D1, e.g. to ground based receiver stations and/or to adjacent aircraft. The broadcasted data packet D1 is indicative of the to-be-broadcasted information pertaining to the first aircraft. Thus, a receiver of the data packet D1 can reconstruct the current identifier $ID1_k$ as well as the position P1 and - using these values - calculate a collision probability and - based thereon - putatively issue a warning to the pilot. This enhances the safety of the aircraft(s) and/or overall situational awareness.

Advantageously, the method comprises a further step of:

- at a later time $T_{k+1}$ (i.e. after the time $T_k$ as discussed above), generating an updated current identifier $ID1_{k+1}$ of the broadcast device which is based on an updated randomly obtained number $RON_k$ (which is in general different to $RON_{k-1}$) and based on the previous identifier $ID1_k$ as previously generated by the control unit (in this example at the time $T_k$). In other words, the previous identifier $ID1_k$ immediately precedes the to-be-created updated current identifier $ID1_{k+1}$. The term "immediately precedes" is to be understood in a way that for the generation of the updated current identifier $ID1_{k+1}$, the previous identifier $ID1_k$ (i.e. the one immediately preceding the current one) is used: $ID1_{k+1} = f (RON_k, ID1_k)$. In other words, while the updated current identifier $ID1_{k+1}$ has the same structure as the previous identifier $ID1_k$, its contents has changed, which makes it appear random such that the updated current identifier $ID1_k$ cannot be easily inferred from the previous identifier $ID1_{k+1}$, or vice-versa, unless $RON_k$ is also known. This is due to the randomly obtained number $RON_k$ being combined with the previous identifier $ID1_k$.

By means of generating the updated current identifier $ID1_{k+1}$ as a function f $(RON_k, ID1_k)$ which is dependent

on the randomly obtained number $RON_k$ and on the previous identifier $ID1_k$, the updated current identifier is not static such as a license plate on a car but it changes with each of its generations (due to the changing randomly obtained number $RON_k$ contributing to the updated current identifier $ID1_{k+1}$). This leads to enhanced privacy because a receiver which has missed one or more packets (e.g. due to the aircraft flying out of range) cannot easily reconstruct the chain of identifiers and assign the received data packets to a single broadcast device. This is due to (1) computational feasibility at the receiver's end since it has to guess the correct randomly obtained number(s) that it missed by trial and error, which is demanding especially when tracking a large number of senders, e.g. in a wide-area network, and/or when limited processing power is available, as is often the case in embedded (on-board) systems; and due to (2) ambiguity, i.e. when the number of random bits added (i.e. the amount of randomness introduced by each RON times the number of missed ID-updates) approaches the number of total bits of the identifiers, the ambiguity increases to the point where a unique reconstruction is no longer possible.

Then, the generated updated current identifier $ID1_{k+1}$ is used for generating an updated data packet D1 by means of the control unit. This updated data packet D1 is then broadcasted by the radio transmitter. Please note that updated data packets D1 with regard to updated positions P1 can and in general will be sent independently of the update of ID1, e.g. at a higher updated frequency. As a result, privacy is enhanced while still maintaining a better situational awareness because a receiver which has missed one or more updates of ID1 (e.g. due to the aircraft flying out of range) cannot easily reconstruct the change of identifiers and thereby assign the received data packets to a single broadcast device.

Then, in another preferred embodiment, the method comprises a further step of

- at each time $T_n$ with n being a positive, non-zero natural number (i.e. n = 1,2,3,...), repeatedly generating the updated current identifier $ID1_n$ of the broadcast device.

The updated current identifier $ID1_n$ which is generated (or "valid") for the respective time $T_n$ is then used for generating and broadcasting the updated data packet D1. This leads to enhanced privacy because a receiver which has missed one or more packets (e.g. due to the aircraft flying out of range) cannot easily reconstruct the change of identifiers and thus assign the received data packets to a single broadcast device.

Advantageously, any time interval $\Delta T_n = T_n - T_{n-1}$ between generations of two consecutive updated current identifiers $ID1_{n-1}$ and $ID1_n$ (and consequently the generation and broadcasting of an updated data packet D1) is between 1 s and 60 s, in particular is between 2 s and 10 s, and in particular is 10 s.

Please note that $\Delta T_n$ can be a fixed constant or varying, i.e. the time intervals between each change of identifiers can or cannot change. In other words, regular or irregular update frequencies are possible.

Please further note that for the sake of clarity, the index "k" as used above for $T_k$, $ID1_k$, $RON_{k-1}$, $ID1_{k-1}$, etc. shall relate to a single, specific point in time ($T_k$) and its surroundings ($T_{k-1}$, $T_{k+1}$) while the index "n" as used here shall relate to the entire set of Ts, ID1s, RONs, etc.

In yet another preferred embodiment, the method comprises a further step of

- at each time $T_n$ with n being a positive, non-zero natural number, for generating the respective current identifier $ID1_n$, applying a cryptographic hash function, in particular for (e.g. deterministically) mapping the respective randomly obtained number $RON_{n-1}$ and the respective previous identifier $ID1_{n-1}$ to the respective updated identifier $ID1_n$.

The cryptographic hash function is advantageously based on at least one bitshifting and/ or (e.g. a bitwise) XOR operation. This leads to a computationally efficient way of generating the current identifier. It has a further advantage that even small (e.g. bitwise) variations in the RON lead to large, apparently random and uncorrelated variations in the to-be-created current identifier ID1. This ensures that there is no apparent correlation between e.g. $ID1_n$ and $ID1_{n+1}$ unless $RON_n$ is also known.

In another preferred embodiment, the method comprises a further step of

- at each time $T_n$ with n being a positive, non-zero natural number, for generating the respective current identifier $ID1_n$, selecting the respective randomly obtained number $RON_{n-1}$ which is used for generating the respective current identifier $ID1_n$ at the respective time $T_n$ from a range of 0 to $(2^{N_e}-1)$ with $N_e$ being a positive, non-zero natural number. Advantageously, $N_e$ is selected from a range of 2 to 8, and in particular $N_e$ is 2. Thus, the amount of randomness which is added to the current identifier with each of its regenerations due to the RON can be tuned between more privacy (i.e. a larger $N_e$) and a more consistent trackability even in the event of missed data packets (i.e. a smaller $N_e$).

Advantageously, the method comprises a further step of:

- at each time $T_n$ with n being a positive, non-zero natural number, generating a subsequent randomly obtained number $RON_n$ which is used for generating the subsequent current identifier $ID1_{n+1}$ of the broadcast device at a later time $T_{n+1}$. This makes it possible to generate the randomly obtained number RON one time step in advance and, e.g. store it in a memory for later usage.

In another preferred embodiment, the method comprises a step of

- at each time $T_n$ with n being a positive, non-zero natural number, generating the data packet D1 in such a way that it comprises (in particular in an, e.g. non-encrypted, header section of the data packet D1) the current identifier $ID1_n$ and a subsequent randomly obtained number $RON_n$ which is subsequently, at a time $T_{n+1}$, used for generating a subsequent updated current identifier $ID1_{n+1}$ of the broadcast device. This makes it possible for a receiver to precompute an expected $ID1_{n+1}$ based on the received $ID1_n$ and $RON_n$ and store this information in a memory and later, at the time $T_{n+1}$, assign a received data packet D1 to a single broadcast device when its identifier has changed from $ID1_n$ to $ID1_{n+1}$. This enhances trackability and reduces computational complexity for the receiver, at least in the nominal case where the receiver does not miss any ID1-update.

As an alternative to this, the method advantageously comprises a step of, at each time $T_n$ with n being a positive, non-zero natural number, generating the data packet D1 in such a way that it comprises (in particular in an, e.g. non-encrypted, header section of the data packet D1) the current identifier $ID1_n$ and the randomly obtained number $RON_{n-1}$ which was used for generating the current identifier $ID1_n$ of the broadcast device at the time $T_n$. This makes it possible for a receiver to - by looking at its received ID1-history - assign a received data packet to a single broadcast device when its identifier has changed. This enhances trackability.

As another aspect of the invention, a computer program product comprises instructions to cause a device as described above with regard to the first aspect of the invention to execute the steps of a method as described above with regard to the second aspect of the invention.

This computer-program product is - according to another aspect of the invention - stored on a computer-readable medium. It can then be read by a device as discussed above with regard to the first aspect of the invention and it can cause the device to execute the steps of a method as described above with regard to the second aspect of the invention.

As yet another aspect of the invention, a use of a broadcast device as discussed above with regard to the first aspect of the invention at a first aircraft (or a pilot onboard the first aircraft such as a paraglider pilot wearing a variometer/RCDI device implementing the functionality as discussed above with regard to the first and second aspects of the invention) for wirelessly broadcasting information pertaining to the first aircraft is disclosed, in particular for collision avoidance and/or improved situational awareness. This improves privacy while enabling efficient collision avoidance and/or situational awareness functionality.

As yet another aspect of the invention, a system for aircraft collision avoidance comprises

- a first broadcast device as discussed above with regard to the first aspect of the invention at a first aircraft (or pilot) for wirelessly broadcasting information pertaining to the first aircraft, and
- a second broadcast device as discussed above with regard to the first aspect of the invention at a second aircraft (or pilot) for wirelessly broadcasting information pertaining to the second aircraft.

Thus a collision probability between the first aircraft and the second aircraft is easier to derive, e.g. by taking the information pertaining to the first and second aircraft into account. Preferably, a collision warning is then issued to the pilot when the collision probability exceeds a certain threshold which helps to decreases the risk of a mid-air collision. This improves overall safety and/or situational awareness.

Brief Description of the Drawings

The invention will be better understood and objects other than those set forth above will become apparent when consideration is given to the following detailed description thereof. Such description makes reference to the annexed drawings, wherein:

Figs. 1a-1c show the principle of Extended Range Encoding (ERC),
Figs. 2-4 show the principle of Adaptive Coordinate Truncation (ACT),
Fig. 5 shows a broadcast device 10 according to the invention and a display unit 18, the broadcast device 10 comprising a positioning device 11, a control unit 12, and a radio transceiver 13, 14,
Fig. 6 shows a system for aircraft collision avoidance comprising a first broadcast device 10 at a first aircraft 1 and a second broadcast device 20 at a second aircraft 2, and

Fig. 7 shows a diagram visualizing the order and information flow for generating a data packet D1 as used in the broadcast device 10 of Figs. 5 and 6.

Modes for Carrying Out the Invention

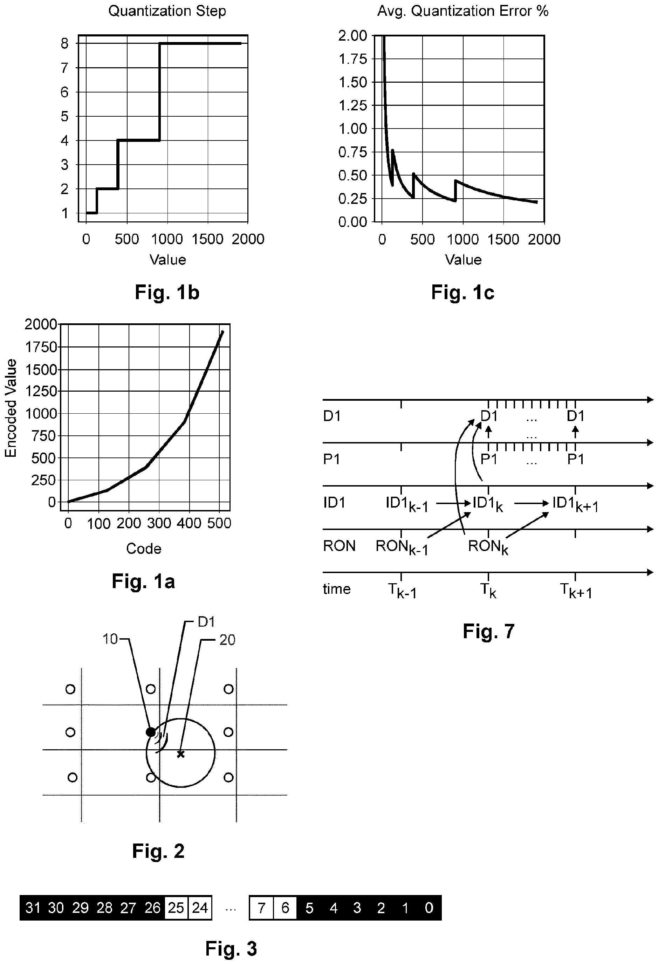

Figs. 1a-1c show the principle of Extended Range Encoding (ERC) as used in an embodiment of the invention. Specifically, in Fig. 1a, it is shown that the encodable value range increases from 0... 511 for a 9 bit integer and for a linear mapping with $2^9-1$ (x-axis) to 0... 1912 for a 9 bit ERC pair with $N_e = 2$, $N_m = 7$ (y-axis, $v_{max}=2^3(2^7 + 127) - 2^7 = 1912$ with $e = 2^2-1$ and $m = 2^7-1$). In Fig. 1b, it is shown that the absolute resolution decreases (i.e. the quantization step increases) at the values $v = 128$, $v =128+256 = 384$, and $v = 128+256+512 = 896$ (x-axis), respectively. However, as it is shown in Fig. 1c, the relative quantization error (y-axis, the quantization step as shown in Fig. 1b at a given value divided by the value itself) decreases with higher ERC encoded values v (x-axis). See the chapter "AMP Protocol Description", section 2.1 for details.

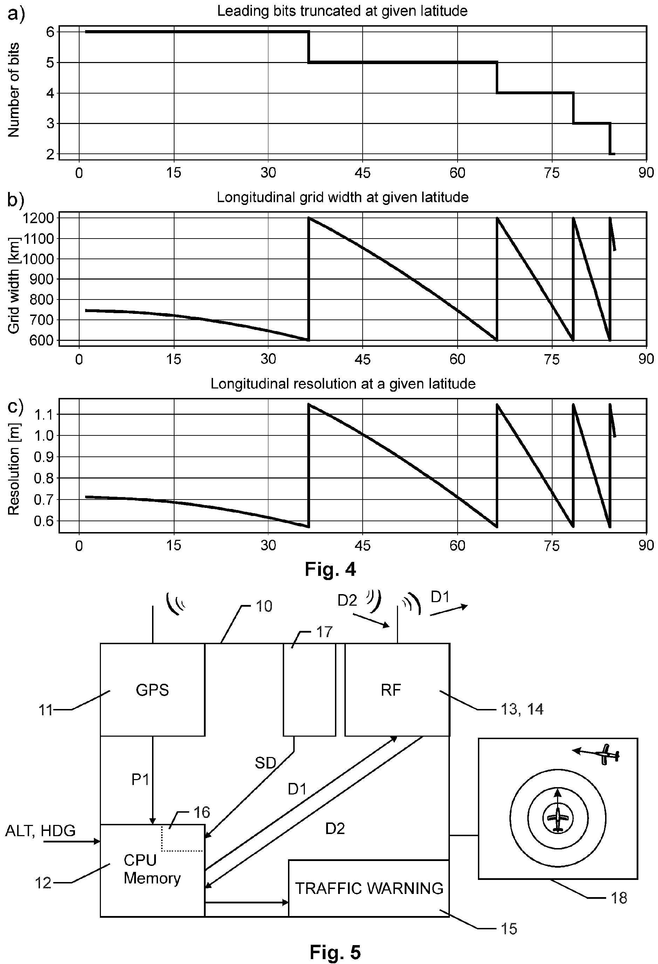

Figs. 2-4 show the principle of Adaptive Coordinate Truncation (ACT) as used in an embodiment of the invention, in which a broadcast device 10 transmits its truncated position P1 in a data packet D1 relative to a local grid cell (rectangles) origin. In Fig. 2, a receiver ("x") (e.g. a second broadcast device 20) of a data packet D1 determines the correct position P1 (black solid dot) of the broadcast device 10 by taking proximity considerations due to limited radio range into account. Due to properties of the grid, any of the open dot positions are also mathematically correct and can only be discarded due to the inherent physical proximity of the sender and the receiver. In Fig. 3, the principle of creating the grid by binary truncation is explained. Six leading and six trailing bits (white on black) are removed from a base 32-bit signed integer, and the center 20 bits are transmitted (black on white) as an unsigned integer. The number of deleted trailing bits determines the extent to which resolution is lost, while the number of deleted leading bits determines the grid size or encodable separation due to a reduced encodable value range. The deletion of the trailing bits is performed after rounding to the closest admissible integer. In Fig. 4, the non-uniform grid of ACT is visualized: If a static bit truncation was used, the resulting grid size would contract towards the poles of the earth for the longitude dimension. As a consequence, the longitudinal extent would drop below the radio range at some point; a receiver could then no longer unambiguously determine the sender's position. Conversely, to maintain a sufficient grid size, longitude would require more bits in the transmission. ACT addresses this by dynamically adapting the longitude grid size with higher/ lower latitudes.

The following table (see also Section 2.2 of the chapter "AMP Protocol Description") provides the rule for constructing the longitude grid in an embodiment of the invention:

| Latitude range | # leading bits truncated | # trailing bits truncated | Longitude Resolution |
| --- | --- | --- | --- |
| llatl < 36° | 6 | 6 | 0.0000064° |
| 36° <=\|lat\| < 66° | 5 | 7 | 0.0000128° |
| 66° <=\|lat\| < 78° | 4 | 8 | 0.0000256° |
| 78° <=\|lat\| < 84° | 3 | 9 | 0.0000512° |
| 84° <=\|lat\| | 2 | 10 | 0.0001024° |

The resulting resolution and grid sizes are shown in Fig. 4: In the top part (panel a), the number of truncated leading bits is shown as a function of the latitude in degrees; the closer the broadcast device gets to the poles (i.e. the more the latitude increases), the less leading bits are truncated from the longitude data PD1_LON. In the middle part (panel b) of Fig. 4, the resulting longitudinal grid size in km as a function of the latitude in degrees is shown, and in the lower part (panel c) the longitudinal resolution in m as a function of the latitude in degrees.

Fig. 5 shows a schematic view of a broadcast device 10 according to the invention as well as a display unit 18. The broadcast device 10 comprises a positioning device 11, a control unit 12 with memory, and a radio transceiver 13, 14. The broadcast device 10 is mounted at a first aircraft 1 (not shown) and receives pressure altitude (ALT) and heading (HDG) data from onboard navigation systems. The positioning device 11 (GPS) is configured to determine a three-dimensional position P1 of the broadcast device/ of the aircraft 1. The control unit 12 (CPU) is configured to receive (via an internal serial bus) the position P1 as determined by the positioning device 11 and fuse the received GPS altitude data with the received pressure-based altitude data to improve altitude precision. Further, the control unit 12 generates, at a time $T_k$ with k being a positive, non-zero natural number, a current identifier $ID1_k$ of the broadcast device 10 based on a randomly obtained number $RON_{k-1}$ and based on a previous identifier $ID1_{k-1}$ as previously, at a prior time $T_{k-1}$, generated by the control unit 12 which is stored in the control unit's memory. Then, a data packet D1 is generated based on the received position P1, heading HDG and based on the generated current identifier $ID1_k$ In the described embodiment, this is all done in software (i.e. as a computer program product stored in a flash memory of the control unit) running on the control unit 12, although outsourcing certain operations to dedicated hardware units (e.g. for encryption/decryption) is possible as well. An optional pseudo random number generator 16 running on the control unit 12 could be initialized by acceleration data SD originating from an accelerometer 17 of the broadcast device 10. This leads to improved entropy. In addition, the acceleration data also serves to augment the position P1. The data packet D1 is then sent via another internal serial bus to the radio transceiver 13 (RF) which wirelessly broadcasts the received data packet D1 (undirected transmission, non-connection based). The data packet D1 is indicative of the to-be-broadcasted information (ID1, truncated latitude, truncated longitude, altitude, aircraft type, ground track/ heading, ground speed as calculated from position updates, climb rate as calculated from altitude updates, turn rate as calculated from heading updates, movement mode, time and other, see sections 3.1.1 and 3.1.2 of the "AMP Protocol Description" for a list).

The control unit 12, at a later time $T_{k+1}$, generates an updated current identifier $ID1_{k+1}$ of the broadcast device 10 based on an updated randomly obtained number $RON_k$ (which was generated at time $T_k$) and based on the previous identifier $ID1_k$ as previously, at the time $T_k$, generated by the control unit 12. The previous identifier $ID1_k$ thereby immediately precedes the updated current identifier $ID1_{k+1}$. Then, an updated data packet D1 is generated and broadcasted based on the generated updated current identifier $ID1_{k+1}$ and updated positional data P1 (and other updated values for heading, speed, etc.).

This last step of repeatedly generating the updated current identifier at each time $T_n$ with n being a positive, non-zero natural number and generating and broadcasting updated data packets D1 is repeated at a time interval $\Delta T$ of 10 s. Please note here that updated data packets with updated positional information P1 (plus heading, speed, etc.) are generated and broadcasted at a higher update frequency of 1 Hz (i.e. once every 1 s), but the identifier is only updated every 10 s, see Fig. 7 for details. Other considerations, e.g. with regard to time frames (see protocol description) apply. Other time interval values/ combinations (e.g. non-uniform time intervals for position and identifier updates) are possible as well.

For generating the respective randomly obtained number $RON_{k-1}$ which is used for generating $ID1_k$, $RON_{k-1}$ it is selected from a range of 0 to $(2^{N_e}-1)$ with $N_e$ being 2. In other words, 2 bits of randomness are mixed into the identifier by means of a cryptographic hash function relying on bit-shift and XOR operations with each regeneration of the identifier. This leads to a computationally rather cheap privacy enhancement because a receiver which has missed one or more data packets D1 (e.g. due to the aircraft flying out of range) cannot easily reconstruct the identifiers and thus assign received data packets D1 to a single broadcast device 10 because the respective RONs are not known to it. At the same time, a rather robust collision avoidance system can be achieved because all received position data is taken into account.

The data packet D1 comprises a header section and a payload section, wherein the header section is non-encrypted and wherein the payload section is encrypted by the AES algorithm with a key size of 128 bits (see the chapter "AMP Protocol Description", section 3.2 for details). In the header section, the data packet D1 comprises the current identifier $ID1_k$ and a subsequent randomly obtained number $RON_k$ which will later, at the time $T_{k+1}$, be used to generated the subsequent current identifier $ID1_{k+1}$. This enables a receiver of the subsequent data packet D1 to easily determine, if the received data packet D1 originates from the same sender (in the case that no data packets are missed). The more data packets D1 are missed by the receiver, the more computationally demanding this gets, because brute force searches are needed.

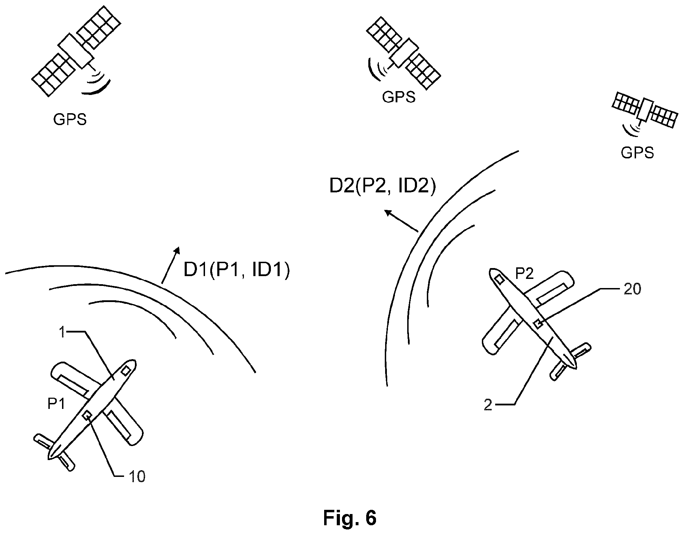

In addition to broadcasting the data packets D1, the radio transceiver 13, 14 (RF) also acts as a radio receiver 14 for receiving foreign data packets D2 as broadcasted from a foreign broadcast device 20 (see Fig. 6). Such foreign data packets D2 are indicative of information pertaining to a second aircraft 2 (see Fig. 6), and the broadcast device 10 is configured to calculate a collision probability between the first aircraft 1 and the second aircraft 2 based on the information pertaining to the first aircraft 1 and based on the received information pertaining to the second aircraft 2.

If the collision probability exceeds a certain threshold, a collision warning ("TRAFFIC WARNING") is issued to the pilot by means of an audiovisual display 15 of the broadcast device 10. This enhances the safety. A separate display unit 18 helps to improve the pilot's situational awareness by displaying the first ("own") aircraft 1 in the center of three circles and the second ("foreign") aircraft 2 with their courses and velocities (arrow lengths, not to scale), also see Fig. 6. The display unit 18 can also be part of the broadcast device 10 (not shown).

This enables the use of the broadcast device 10 for collision avoidance with an improved situational awareness as well as the creation of a system for aircraft collision avoidance comprising a first broadcast device 10 at a first aircraft 1 and a second broadcast device 20 at a second aircraft 2. Such a system is shown in Fig. 6. The first aircraft 1 at position P1 is equipped with a broadcast device 10 as described above. The second aircraft 2 at position P2 is equipped with a broadcast device 20 which is - except for a different initial identifier $ID2_0$ - the same as the broadcast device 10 as described above. The first broadcast device 10 wirelessly broadcasts information pertaining to the first aircraft 1 (including its identifier ID1) in the form of data packets D1. The second broadcast device 20 wirelessly broadcasts information pertaining to the second aircraft 2 (including its identifier ID2) in the form of data packets D2. Because the first broadcast device 10 receives the data packets D2 as broadcasted from the second broadcast device 20 (and vice versa), a collision probability between the first aircraft 1 and the second aircraft 2 is easier to derive by taking the information pertaining to the first and second aircraft 1, 2 into account. This enhances safety and the pilots' situational awareness. Due to the invention with its changing identifiers ID1, ID2, however, it is not computationally easy for either of the aircraft to immediately recognize each other again once they have flown out of radio range and missed a one or more data packets with ID-updates. This enhances privacy.

Fig. 7 shows a diagram visualizing the order and information flow for generating a data packet D1 as used in the broadcast device of figs. 5 and 6. In the fifth line, times $T_{k-1}$, $T_k$, $T_{k+1}$ are shown with a time interval of $\Delta T$ of 10 s. At the time $T_k$, a current identifier $ID1_k$ is generated based on the randomly obtained number $RON_{k-1}$ (forth line) and based on the previous identifier $ID1_{k-1}$ (third line). At the same time $T_k$, a subsequent $RON_k$ is generated which is later, at the time $T_{k+1}$ used for generating $ID1_{k+1}$. A position P1 (incl. further data such as heading, speed, etc.) is determined at 1 Hz (second line) and broadcasted in data packets D1 (first line) which are broadcasted each second (each of these based on $ID1_k$ for 10 s). At each time $\Delta T = 10$ s, this identifier ID1 is updated. The next position updates are then broadcasted each second but based on $ID1_{k+1}$. This enables a more precise position tracking while the identifiers change at a lower frequency. Please note that irregular update frequencies are possible both for the ID1-update and the P1-update (not shown), even independently from each other.

Definitions:

Throughout the application documents, the term "aircraft" relates to all VFR-operated or VFR-operatable manned and teleoperated or automated unmanned flying or flyable objects such as gliders, towplanes, helicopters, parachutes, dropplanes, hanggliders, paragliders, single-engine piston planes, multi-engine piston planes, jet planes, (hot air) balloons, airships (such as, e.g. blimps), and UAVs (unmanned aerial vehicles such as drones).

The term "pilot" refers to either the human on board the aircraft or on the ground or on board another aircraft and supervising or piloting the aircraft from a distance. Additionally, in the case of fully automated systems, the term "pilot" may refer to, e.g. a flight control system.

The term "broadcast" relates a method of transferring a message (or here, the data packet) from a single transmitter to all recipients within radio range simultaneously, e.g. non-connection based. This is in contrast a point-to-point (e.g. connection or link-based) method in which a single sender communicates with a single receiver. Whenever the term "transmitter" or "sender" is used, it shall relate to "broadcaster".

Aircraft Motion Prediction (AMP) Protocol Description

*1. Introduction*

This section describes a possible implementation of the Aircraft Motion Prediction (AMP) Protocol, i.e. the structure and generation of a data packet used for the invention. All information in this section is to be treated in a non-limiting manner but as examples/ advantageous embodiments only. The AMP Protocol enables the following applications:

- Situation awareness
- Traffic monitoring
- Collision avoidance
- Tracking
- Identification

The following description omits the description of the physical and data link layers, as they are implemented by standard electronic components which are known to the skilled person (e.g. nRF905 from Nordic Semiconductors).

*1.1. Coordinates Datum*

The WGS-84 standard is used throughout. Elevation is referenced to the WGS-84 ellipsoid surface (i.e. not the geoid, not MSL). Longitude and latitude are encoded in degrees, scaled 1E-7. South and West are negative.

*1.2. Timing and Synchronization*

To support a large number of broadcast devices, radio access is organized in time frames. A single time frame has a duration of, e.g. 1 s. Global time is available to any broadcast device via the positioning device. The number of data packets a broadcast device is allowed to send per time frame (i.e. the duty cycle) is regulated by law (e.g. 1% over one hour). All data packets per time frame have the same information contents (such as position, speed etc.) but can differ in timestamp, protocol version used, etc. (see section 2.4 below).

Transmission are organized in a plurality of transmit-windows per single time frame such that a single data packet is transmitted per transmit-window. As an example, with 1 sec time frames and 2 transmit-windows per time frame, the broadcast device nominally transmits a data packet once in each of these two transmit-windows. The nominal transmit/update rate is thus 2 data packets per second in this example.

Send timing is random within the transmit-window. If a packet collision is detected, a broadcast device retries after a random time delay. If the transmit-window ends before a successful transmission is made, the data packet is lost.

*2. Algorithms and Methods*

*2.1. Extended Range Encoding*

Extended Range Encoding (ERC) is a nonlinear encoding technique to encode a value with a large input range efficiently, using less bandwidth (bits) compared to a simple linear encoding. Due to the nonlinearity of the approach, it sacrifices (absolute) resolution at higher values (i.e. it utilizes a larger quantization interval), but achieves a much larger value range. The relative resolution (i.e. the ratio between the quantization interval and the encoded value) can be tuned to suit the intended application.

The method is comparable to floating point representations. The difference is that ERC uses integers and is flexible to adjust to the individual values and fields in the AMP protocol. ERC is parametrizable:

- Total number of bits N to use for code points (i.e. ERC representation of a numerical value v)
- Number of bits $N_m$ to use for mantissa m, and, derived from N and $N_m$, the number of bits $N_e$ to use for the exponent e.
- Whether negative values v are allowed, or only non-negative. Signed values are encoded by using the most significant bit of the exponent as a minus sign.
- A linear scaling factor A for every field representing the physical unit/ resolution for the encoded numerical value

Assume the pair c = (e, m) is a code point indicative of a to-be-transmitted value v, the code point comprising an exponent e and a mantissa m. Both e and m are non-negative integers, while v is a non-negative real number with a physical unit determined by the scaling factor A. The mantissa m has a bit width of $N_m$. The total bit with of c is N, thus the bit width of the exponent e is $N_e = (N-N_m)$.

For better readability, v* is defined as v* = ROUND(v / A) as the result of the value divided by the scaling factor, rounded to the nearest integer. Conversely, let v = A * v*. Then, the numerical input value v encoded by code point c is given by:

$$v^* = 2^e * (2^{Nm} + m) - 2^{Nm}$$

$$v = A * v^*$$

The reverse operation for computing c = (e, m) from v is defined by the following algorithm:

1. Let v* = ROUND(v / A)

2. Compute the exponent: Find the largest e from the set of integers 0... $(2^{Ne} - 1)$ that satisfies

$$v^* >= 2^{Nm} (2^e - 1)$$

3. Compute the mantissa:

$$m = (v^* + 2^{Nm}) / 2^e - 2^{Nm}$$

The code point c = (e, m) can be represented as the binary concatenation of the exponent e and the mantissa m, yielding the binary representation of c:

$$c_{binary} = e << N_m \mid m$$

where "|" denotes the "bitwise OR" operation and "<<" the "shift left" operator.

An example for $N_e$ = 2, N = 9 yields:

- The encodable value range increases from 0... 511 (for a 9 bit integer and for a linear mapping with $2^9$-1=511) to 0... 1912 (for a 9-bit ERC mapping with $N_e$ = 2, $N_m$ = 7, and with $v_{max}$ = $2^3$ ($2^7$ + 127) - $2^7$ = 1912 with e = $2^2$-1 and m = $2^7$-1), see Fig. 1a.

- The absolute resolution decreases (or the quantization interval increases) at v = 128, v =128+256, v = 128+256+512 = 896 and so forth, see Fig. 1b.

- The relative quantization error (i.e. the quantization step divided by the encoded value) decreases with higher ERC encoded values v, see Fig. 1c.

The parametrization in N, $N_e$ therefore defines the range of encodable values v and how quickly the resolution degrades with larger values. In addition to these parameters, the AMP protocol also applies a linear scaling A to every field which defines the physical unit/ resolution for the encoded numerical value v (e.g. 0.1 m/s for ground speed).

*2.2. Adaptive Coordinate Truncation*

Adaptive Coordinate Truncation (ACT) is a system to reduce the required bandwidth for transmitting the 2D position, exploiting that sender and receiver are necessarily local due to radio range limitations.

*2.2.1. Broadcasting ACT*

To transmit positions P1, the WGS-84 geodesic system is used. The base units are longitude and latitude, scaled to 1E-7° (pre truncation). Signed integers are used, north and east are positive, respectively. Altitude is relative to the ellipsoid (i.e. not the geoid) and not truncated, i.e. not part of this algorithm.

In ACT, the WGS-84 coordinate space is divided into grid cells, where the grid dimension is chosen to be well larger than the maximum expected radio range. A sender transmits its position relative to the local grid cell origin. A receiver can determine the grid cell that results in the lowest distance to the sender. By the principle of locality, this must then be the true solution, since other solutions are not physically possible due to the radio range.

The situation is depicted in Fig. 2: A receiver ("x") determines the correct position (black solid dot) by proximity. Due to properties of the grid, any of the open dot positions are also correct and can only be discarded due to the principle of locality.

ACT uses a grid that is not uniform: If it were, the effective grid size would contract towards the poles for the longitude dimension. As a consequence, the longitudinal extent would drop below the radio range at some point; a receiver could then no longer unambiguously determine the sender's position. Conversely, to maintain a sufficient grid size, longitude would require more bits in the transmission.

ACT addresses this by dynamically adapting the longitude grid size with higher/ lower latitudes.

The grid is created by binary truncation, which renders the calculations computationally efficient: Starting with a base 32-bit signed integer, a number of bits on the left and right are removed, and only the "center" part is transmitted: In the example in Fig. 3, six leading bits labelled 26... 31 and six trailing bits labelled 0...5 (white on black) are removed from a 32-bit input value, and the center 20 bits labelled 6...25 of the input value are transmitted (black on white). The number of deleted trailing bits determines the amount of lost resolution, while the number of deleted leading bits determine the grid size. The deletion of the trailing bits is performed after rounding to the closest admissible integer, i.e. a rounding up is performed if the most significant truncated bit is set to one. This is done by adding the value of the most significant to-be-truncated bit to the input value prior to trailing bit truncation. In the specific example of Fig. 3 with six truncated trailing bits, $2^5$ is added to the input value prior to trailing bit truncation which results in a mapping of all original input values to 0, 64, 128, 192, ... after truncation. Negative input values map correctly due to the properties of 2's complement.

ACT uses a minimum grid size of 600 km (well above the radio range of approximately 100 km) and 20 bits (after truncation) for both longitude and latitude. Latitude deletes six leading and six trailing bits, resulting in a latitudinal grid size of approximately 750 km. For longitude, the white block with black text in Fig. 3 (the transmitted bits) is gradually shifted to the left as the sender approaches the poles. The shifts are optimized in a way to ensure a minimum longitudinal grid size (i.e. longitudinal extent of the grid cell) of 600 km.

The following table shows the rule for constructing the longitude grid:

| Latitude range | # leading bits truncated | # trailing bits truncated | Longitude Resolution |
| --- | --- | --- | --- |
| llatl < 36° | 6 | 6 | 0.0000064° |

(continued)

| Latitude range | # leading bits truncated | # trailing bits truncated | Longitude Resolution |
|---|---|---|---|
| 36° <=\|lat\| < 66° | 5 | 7 | 0.0000128° |
| 66° <=\|lat\| < 78° | 4 | 8 | 0.0000256° |
| 78° <=\|lat\| < 84° | 3 | 9 | 0.0000512° |
| 84° <=\|lat\| | 2 | 10 | 0.0001024° |

The resulting resolution and grid sizes are shown in Fig. 4.

*2.2.2. Receiving ACT*

A receiver can perform the following steps when receiving ACT coordinates:

1. Disambiguate latitude from the received truncated latitude data; this can be done due to the fact that the latitude grid (i.e. the latitudinal extent of the local grid cells) is uniform and that the own untruncated latitude data is known to the receiving broadcast device.
2. Determine longitude grid parameters from the table above and from the latitude data as computed in step 1.
3. Disambiguate longitude from the received truncated longitude data, the grid parameters from step 2, and the own untruncated longitude data as known to the receiving broadcast device.

*2.3. Enhanced Privacy Random ID*

To improve the ability to conceal an identity of a broadcast device while maintaining consistency for collision avoidance, the AMP protocol features Enhanced-Privacy Random ID (EPRID).

The method provides a chain of identifiers (IDs) that are broadcasted in a data packet so that signals can be correlated over a short time (continuous reception), but not over a long time (with missed data packets). A broadcast device's ID (i.e. the current identifier $ID_k$ for the time $T_k$) thereby changes randomly over time: A randomly obtained number RON is generated, e.g. by randomly selecting it from a finite set of numbers or randomly generating it, e.g. by means of a true random number generator or some sufficiently seeded pseudo random number generator (PRNG). This RON is then mixed together with the previous identifier $ID_{k-1}$ by means of a cryptographic hash function to generate the current identifier $ID_k$ which is therefore not equal to the previous identifier $ID_{k-1}$. The subsequent randomly obtained number (i.e. $RON_k$) is transmitted as part of the data packet, such that a receiver can - upon receipt of the next data packet - correlate a then received $ID_{k+1}$ to the previously received $ID_k$ without effort. The RON is advantageously chosen from the range $0...2^{Ne} - 1$, where Ne is the number of random bits used for generating the RON.

If a receiver continuously receives at least one data packet per distinct RON/ID pair, then it can readily derive the next ID from this.

However, if a receiver loses one or more data packets, it must start the observation from new since with unknown RON, the new ID cannot be related to the old one. Alternatively, the receiver can try to "guess" the RON. Guessing is rather fast for one or a few missed data packets (only a few bits of randomness were added), but the complexity increases exponentially with the number of bits that need to be guessed. The capability of a receiver to successfully calculate the correct sequence of RONs is effectively limited by two effects:

1. Computational feasibility: Especially when tracking hundreds of targets, e.g. in a wide-area receiver network, or when limited processing power is available, as is often the case in embedded (on-board) systems.
2. Ambiguity: When the number of random bits added (i.e. the amount of randomness introduced by each RON times the number of missed ID-updates) approaches the number of total bits of the ID, the ambiguity increases to the point where a unique reconstruction is no longer possible: There is always a sequence of RONs that generate any given ID from any other.

Example: The random ID has a bit width of 32 bits. An 8 bit value is used for the randomly obtained number RON. Note: The amount of randomness in the RON can be varied, 2 bits are advantageously chosen.

*2.3.1. Prerequisites*

Advantageously, a cryptographic hash function comprising bitwise XOR-/and bitshifting-operations is used for mixing the randomly obtained number $RON_{k-1}$ with the previous identifier $ID_{k-1}$ for generating the current identifier $ID_k$

Such a cryptographic hash function HASH() thus is of the form $ID_k = HASH(RON_{k-1}, ID_{k-1})$. HASH() is deterministic, fast to compute, small changes of the input lead to large changes of the output, and it is computationally infeasible to find the reverse operation.

*2.3.2. Sender*

On the sender, EPRID comprises the following steps:

1. Set k=1, initialize $ID_1$ by choosing a random unsigned 32-bit integer and/or using a fixed value which is e.g. stored in a non volatile memory.
2. At each time $T_k$, randomly choose a $RON_k$ from the set 0... $2^{Ne}$-1.
3. Use the pair ($RON_k$, $ID_k$) in AMP data packet broadcasts.
4. Advantageously after between 2 and 10 seconds, at time $T_{k+1}$, increment k by 1 and compute the new $ID_k$ from the previous $ID_{k-1}$ and the $RON_{k-1}$:

$$ID_k = HASH(RON_{k-1}, ID_{k-1});$$

5. Go to step 2.

The duration between the ID updates (step 4) and the number of bits to use for the randomness (Ne) can be chosen by the sender to trade off privacy vs. trackability. The default value is 10 s, 1 s is the minimum value. The default value for Ne is 2, the minimum 1, the maximum 8. The broadcast device may adapt the interval in flight. The ID update may happen at any time, but only after the RF time frame is completed.

*2.3.3. Receiver*

The receiver of a packet with a (RON, ID) pair performs the following steps:

1. Initialize an internal memory store for storing a list of (ID, ID') pairs, referenced as ID[i], ID'[i], wherein i is a natural number and refers to the i-th entry in the memory store.

2. When receiving a (RON, ID) pair, check the memory store if an entry i exists with ID = ID[i]. If a match is found, assume the new data packet originates from a known sender with a known current identifier ID. Break.

3. Else, check the memory store if an entry i exists with ID = ID'[i]. If a match is found, assume the new data packet originates from a known sender with an updated current identifier ID and update the memory store entry to (ID, HASH(RON, ID)). Break.

4. Else, assume the new data packet originates from an unknown sender. Add the pair (ID, HASH(RON, ID)) to the memory store.

5. Continue with step 2.

If no matching ID is found in step 3, a receiver may optionally employ a deeper search, i.e. over multiple ID updates, assuming that it has received EPRID-enabled data packets before. This requires a brute-force search. This is feasible mostly for ground-based receivers. Airborne devices for collision avoidance purposes will probably not do this, e.g. due to computational limitations of embedded systems.

*2.4. Dynamic Message Versioning*

Dynamic Message Versioning (DMV) is a method for simplifying data packet protocol updates (e.g., changing the precision, layout, size, or semantics of the contents/values, or modifying other aspects of the broadcasted data packets such as modulation, error correction, encryption, preambel etc.) while eliminating the putative need for a hard firmware expiration mechanism that may be present in prior art broadcast devices: The fundamental nature of such a distributed system as the broadcast devices according to the invention is that all participating nodes/broadcast devices need to understand the updated data packet protocol to retain compatibility. With the mentioned firmware expirations, prior art broadcast devices that did not receive a recent firmware or protocol upgrade stopped operating at a predefined date. Thus, the active firmware and thus data packet protocol versions at any given date could be controlled, allowing a concerted, global protocol update, e.g. once every year. However, this is only possible at the cost of manual user intervention for all devices, which is sometimes cumbersome and expensive, particularly in complex aircraft avionics systems.

DMV-enabled broadcast devices do not require such a firmware expiration mechanism while still allowing the protocol to change and improve, e.g. subject to the capabilities of involved broadcast devices. A DMV-enabled broadcast device can therefore be made backward-compatible indefinitely, i.e. it is then capable of receiving and sending AMP data packets of any (lower) version. This makes an older broadcast device visible to newer ones automatically. For vice-versa visibility, DMV can dynamically balance the use of different versions of the data packet protocol based on the capabilities of other receiving broadcast devices in the vicinity of the transmitting broadcast device. The maximum protocol version a DMV-enabled broadcast device is capable of receiving, processing, and transmitting is published in the "ver_max" field in the AMP data packet header and is thus transmitted with every AMP data packet (see below). A transmitting broadcast device can then fallback to a lower protocol version if a receiving broadcast device only understands this.

### 2.4.1. DMV Operating Principle

- Every transmitting DMV-enabled broadcast device ("sender") updates and maintains a list of nearby receiving DMV-enabled broadcast devices ("receivers") and their published maximum supported protocol version ( "ver_max"-field in the header section of an AMP data packet, see section 3.1.1 below). Note that this maximum supported protocol version may deviate from the actual version used in a specific data packet ("ver"-field in the header section of an AMP data packet, see section 3.1.1 below).

- For every AMP data packet that is transmitted, the sender chooses the protocol version ("ver") based on this list. Heuristics are applied to determine this protocol version used for transmissions, thus maintaining a backward-compatible minimum connectivity with older clients, albeit at a lower update frequency. The parameters used thereby may be dynamically adapted over time: For instance, a lower data packet protocol version may get a higher priority and thus be transmitted more frequently, e.g., at least once every 2 seconds, immediately after a new AMP-protocol release. This allows as many clients as possible to catch up with the respective update. After a transition period, for example after 4 to 8 weeks, the use of lower-versioned AMP data packets may gradually be reduced, e.g., to at least once every 6 seconds.

- The most compatible protocol version is 0, compatible with all DMV-enabled and possibly even prior art broadcast devices that are not DMV-enabled. A base rate (e.g. once every 15 seconds) of protocol 0 data packets can be used to remain compatible indefinitely.

### 2.4.2. Implementation

In this section, the DMV-enabled broadcast device under consideration is denoted as "host" and nearby DMV-enabled broadcast devices are referred to as "clients". This section explains how the host selects the protocol version for broadcasting data packets based on data packets received by the host from the clients.

Note that both roles (host and client) are usually present in any DMV-enabled broadcast device, such that this rule applies symmetrically for every client as well. Non-senders (e.g. ground-based receiver stations) have no means to publish their DMV-capabilities. It is expected that these are updated frequently and/or support the latest protocol version at any time or at least with a short delay after a protocol/firmware update becomes available. Non-receivers (e.g. paraglider beacons) can transmit a predefined value for "ver max", thus indicating that they cannot receive data packets. Thus, they can then be excluded from DMV.

Let i be an index for the list of received AMP clients, as stored in the host's memory, with i being a non-zero natural number and i = 1...Nc with Nc being the total number of clients from which data packets are received. Clients from which no data packets are currently received are removed from this list. Let then "ver_max$_i$" be a client's maximum supported AMP protocol version, as last received in the header section of a data packet sent by the client i. Hereby, it is assumed that "ver_max$_i$" does not change over time of operation of client i, i.e. during broadcasting of data packets. This is because firmware and thus protocol updates are usually not performed during operation of the broadcast device.

Let m[i] then be the count of missed (i.e. unreceivable) data packets for each client i, i.e. data packets that the respective client i cannot have received (e.g. due to the data packet not being sent) or data packets that the respective client i cannot have parsed (e.g. due to the data packet having a "ver" > "ver_max$_i$"). This number-count m[i] is derived at the nominal AMP transmit or update rate taking transmit-windows into account: In other words, if the host deliberately does not send a data packet at all (e.g. due to RF collision or bandwidth management), this unsent data packet counts as a miss for all clients i and m[i] += 1 for all i = 1...Nc.

Because a plurality of transmit-windows is used per time frame (see section 1.2 above), the protocol version "ver" of the to-be-broadcasted data packet is determined before the start of each transmit-window. Whatever happens during the transmit-window's duration does not influence the transmission.

The array m[i] of missed data packets for each client i is then updated as follows:

1. At the beginning of any transmit-window, increment m[i] for every client i by 1.

2. If a data packet is sent successfully during the transmit-window: For every client i, set m[i] to zero for client i if the transmitted version "ver" as sent by the host is smaller than or equal to client's maximum supported version "ver_max$_i$". Thus, if a client i can receive and process the data packet, m[i] = 0 for this respective client i.

Before the beginning of a transmit-window, the protocol version "ver" to be used for the broadcasted data packet in this transmit-window is determined as follows:

1. Let the desired client update interval t$_{cli}$[i] for each client i be:

$$t_{cli}[i]= f(D[i], ver\_max_i, M_i)$$

where D[i] is a norm function indicative of the distance between the host and the client i, ver_max$_i$ is the maximum supported protocol version of the client i, M$_i$ is indicative of metadata available for the client i, e.g. aircraft type or firmware version, and f() is a dynamic client update function. For a definition of the dynamic client update function f(), see section 2.4.3 below.

2. If the client i is in conflict with the host (i.e. if the client i is in danger of a collision with the host), set t$_{cli}$[i] to 1.

3. Let the send gap g[i] for client i be the discrepancy between the number of missed data packets m[i] by the client i and the desired client update interval t$_{cli}$[i]. For any client i, the send gap g[i] is then given by

$$g[i] = m[i] - t_{cli}[i]$$

Note that the send gap g[i] starts negative and continuously increases if no client-supported transmission has been made. A gap of 0 or higher indicates that the desired client update interval t$_{cli}$[i] is not fulfilled and therefore a need for transmitting a supported data packet to the client i arises.

4. If no g[i] is 0 or higher for all clients i, select the maximum supported protocol version of the host. Break.

5. If some or all g[i] are non-negative, i.e. 0 or higher (i.e. if the desired client update interval t$_{cli}$[i] is missed for some or all clients i), select the protocol version "ver" as the minimum of "ver_max$_i$" of all clients with non-negative g[i].

*2.4.3. Dynamic Updates*

The desired client update interval t$_{cli}$[i] of supported data packets for each client i is not fixed but may be adapted to the current situation in the population of broadcast devices, e.g. based on active firmware/ protocol versions and/ or based on situational parameters. This is reflected in the dynamic client update function f(D[i], ver_max$_i$, M$_i$) used for deriving t$_{cli}$[i] as discussed above. The following basic rules apply:

• A base desired client update interval is based on the vehicle type M$_i$ of the client i. Examples are:

  ◦ Hang glider, paraglider: 4: If 4 data packets have been missed by client i (i.e. if no supported data packet is received by client i for 4 transmit-windows), then transmit a supported fallback data packet (i.e. with a compatible protocol "ver") to the client i.

  ◦ UAV: 2: If 2 data packets have been missed by client i (i.e. if no supported data packet is received by client i for 2 transmit-windows), then transmit a supported fallback data packet (i.e. with a compatible protocol "ver") to the client i.

  ◦ All others: 1: If 1 data packet has been missed by client i (i.e. if no supported data packet is received by client i for 1 transmit-window), then transmit a supported fallback data packet (i.e. with a compatible protocol "ver") to the client i.

- If a client i signals no RX capabilities (i.e. if the published $ver\_max_i$ is a predefined value), set $t_{cli}[i]$ = 20: If 20 data packets have been missed by client i (i.e. if no supported data packet is received by client i for 20 transmit-windows), then transmit a supported fallback data packet (i.e. with a compatible protocol "ver") to the client i. This leads to an effective disregard of client i.

- If the horizontal distance as given by the norm function D[i] is larger than, e.g. 3 km, multiply $t_{cli}[i]$ by 2: If the client i is "far away" horizontally, then increase the number of allowed missed data packets before transmitting a supported fallback data packet (i.e. with a compatible protocol "ver") to the client i by a factor of 2.

- If the vertical separation as given by the norm function D[i] is larger than, e.g. 500 m, multiply $t_{cli}[i]$ by 2: If the client i is "far away" vertically, then increase the number of allowed missed data packets before transmitting a supported fallback data packet (i.e. with a compatible protocol "ver") to the client i by a factor of 2.

- If the approach time (distance divided by the relative speed vector projected on the relative position vector) of the client i is less than 30 seconds, set $t_{cli}[i]$ to 1: If the client i is on a collision course with the host with an expected approach in less than 30 sec, then transmit a supported fallback data packet (i.e. with a compatible protocol "ver") to the client i.

- If a client i's $ver\_max_i$ is far behind the latest AMP protocol (e.g. if a firmware update for the client i is available for more than 2 years), multiple $t_{cli}[i]$ by 2: If the client i's firmware is "old", then increase the number of allowed missed data packets before transmitting a supported fallback data packet (i.e. with a compatible protocol "ver") to the client i by a factor of 2.

A placeholder client for protocol version 0 (most compatible protocol version) and a client update interval of 10 may be added to retain a base, worst-case compatibility.

### 3. AMP protocol

### 3.1. Marshalling and Semantics

A data packet comprises a header section and a payload data section. The size of the header section is 8 bytes, of the payload section is 16 bytes. The header is transmitted in clear (non-encrypted), the payload is encrypted. The data packet can be constructed as follows:

### 3.1.1. Header

The header section of the data packet comprises:

| Field | Description |
| --- | --- |
| id | Indicative of the identifier of the sender, can be either a current identifier $ID_k$ for EPRID (see above) or fixed. |
| ron | Indicative of a subsequent randomly obtained number $RON_k$ for generating $ID_{k+1}$ |
| urgency | Message urgency, can be between NORMAL and MAYDAY. Can have an effect on, e.g. hop_max. |
| hop_max | Maximum number of retransmissions for creating a mesh-network for message relaying between a plurality of broadcast devices. |
| hop count | Current count of retransmissions, incremented with each message relay. |
| ver | AMP protocol version used by sender in this data packet. Can be evaluated by the receiver to determine which fields to process. |
| ver max | Maximum AMP protocol version supported by the sender for receive or transmit. |

### 3.1.2. Payload

| Field | Unit/Scaling | Description |
| --- | --- | --- |
| lat trunc | | Latitude, truncated with ACT, see above. |

(continued)

| Field | Unit/Scaling | Description |
| --- | --- | --- |
| lon trunc | | Longitude, truncated with ACT, see above. |
| alt | m | Altitude. |
| acft_type | enum | Aircraft type: Undefined, Glider, Towplane, Helicopter, Parachute, Dropplane, Hangglider, Paraglider, Single-engine piston, Jet, Multi-engine, Balloon, Airship, Blimp, UAV, Static. |
| track | 1° | Ground track. |
| speed | .1 m/s | Ground speed, unsigned ERC, see above. |
| climb | .1 m/s | Climb rate, signed ERC, see above. |
| turnrate | .1 °/s | Turn rate, signed ERC. |
| mov mode | enum | Discrete movement mode: On ground, Flying, Circling. |
| stealth | flag | Indicating intent of sender to reduce visibility |
| notrack | flag | Indicating intent of sender not to track his signal, e.g. with ground station receivers. |
| timestamp | .25 s | Unix epoch timestamp, in quarter seconds, UTC from GNSS. |

*3.2. Encryption and Decryption*

The payload is encrypted to ensure message integrity, system safety and provide protection for the relevant content against eavesdropping.

The AES algorithm with a key size of 128 bits is used. The key is fixed and shared by all participants of the system. Only the payload block (see Section 3.1.2) is encrypted, the header is transmitted in clear.

Prior to encryption, a 128-bit cryptographic nonce is mixed with the payload. The nonce is created deterministically from the header of the data packet, a time stamp of the data packet, and a secret constant. Because the cryptographic nonce contains the time stamp, replay attacks are not feasible.

The broadcasted, encrypted payload is generated as

$$\text{payload}_E = \text{AES}(\text{nonce} \wedge \text{payload}, \text{key})$$

where "^" denotes the bitwise-XOR operator.

Note:

Any embodiments described with respect to the device shall similarly pertain to the method, the computer program product, the use, and the system. Synergetic effects may arise from different combinations of the embodiments although they might not be described in detail.

The scope of the invention is defined by the claims.

**Claims**

1.  A broadcast device (10) for wirelessly broadcasting information pertaining to a first aircraft (1), the broadcast device (10) comprising:

    - a positioning device (11) configured to determine a position (P1) of the broadcast device (10),
    - a control unit (12) configured to:

        * receive the position (P1) as determined by the positioning device (11), and
        * generate a data packet (D1) comprising the received position (P1) or values indicative thereof, and

    wherein the broadcast device (10) further comprises

        - a radio transmitter (13) configured to receive the generated data packet (D1) and wirelessly broadcast the received data packet (D1),

wherein the broadcasted data packet (D1) is indicative of the to-be-broadcasted information,
**characterized in that** the control unit (12) is configured to generate, at a time $T_k$ with k being a positive natural number, a current identifier ($ID1_k$) of the broadcast device (10) based on a randomly obtained number ($RON_{k-1}$) and based on a previous identifier ($ID1_{k-1}$) as previously, at a prior time $T_{k-1}$, generated by the control unit (12), and **in that** the control unit (12) is configured to generate the data packet (D1) such that the data packet (D1) comprises the generated current identifier ($ID1_k$) of the broadcast device (10) or values indicative thereof.

2. The broadcast device (10) of claim 1 configured to, at a later time $T_{k+1}$, generate an updated current identifier ($ID1_{k+1}$) of the broadcast device (10) based on an updated randomly obtained number ($RON_k$) and based on the previous identifier ($ID1_k$) as previously generated by the control unit (12), wherein the previous identifier ($ID1_k$) immediately precedes the updated current identifier ($ID1_{k+1}$), and
wherein the broadcast device (10) is further configured to generate and broadcast an updated data packet (D1) based on the generated updated current identifier ($ID1_{k+1}$)

3. The broadcast device (10) of claim 2 configured to, at each time $T_n$ with n being a positive natural number, repeatedly generate the updated current identifier ($ID1_n$) of the broadcast device (10), and
wherein the broadcast device (10) is further configured to generate and broadcast the respective updated data packet (D1) which is based on the updated current identifier ($ID1_n$) which is valid for the respective time $T_n$.

4. The broadcast device (10) of claim 3 wherein any time interval $\Delta T_n = T_n - T_{n-1}$ between generations of two consecutive updated current identifiers ($ID1_{n-1}$, $ID1_n$) is between 1 s and 60 s, in particular is between 2 s and 10 s, and in particular is 10 s.

5. The broadcast device (10) of any of the preceding claims configured to, at each time $T_n$ with n being a positive natural number, for generating the respective current identifier ($ID1_n$), apply a cryptographic hash function, in particular deterministically mapping the respective randomly obtained number ($RON_{n-1}$) and the respective previous identifier ($ID1_{n-1}$) to the respective current identifier ($ID1_n$),
and in particular wherein the cryptographic hash function comprises at least one bitshifting operation and/or at least one XOR operation.

6. The broadcast device (10) of any of the preceding claims configured to, at each time $T_n$ with n being a positive natural number, for generating the respective current identifier ($ID1_n$), randomly select the respective randomly obtained number ($RON_{n-1}$) from a predefined finite set of numbers.

7. The broadcast device (10) of any of the preceding claims configured to, at each time $T_n$ with n being a positive natural number, for generating the respective current identifier ($ID1_n$), select the respective randomly obtained number ($RON_{n-1}$) from a range of 0 to ($2\char94 N_e-1$) with $N_e$ being a positive natural number,
and in particular wherein $N_e$ is selected from a range of 2 to 8, and in particular wherein $N_e$ is 2.

8. The broadcast device (10) of any of the preceding claims further comprising a random number generator (16) configured to generate the randomly obtained number ($RON_{n-1}$) used for generating the respective current identifier ($ID1_n$),
and in particular wherein the broadcast device (10) is configured to initialize the random number generator (16) based on at least one of the group of

   - at least a part of the position (P1),
   - a timestamp, and
   - a value derived from a sensor (17) of the broadcast device (10).

9. The broadcast device (10) of any of the preceding claims configured to generate the data packet (D1) in such a way that the data packet (D1) comprises a header section and a payload section, and in particular wherein the header section is non-encrypted and/or wherein the payload section is encrypted.

10. The broadcast device (10) of claim 9 configured to encrypt the payload section of the data packet (D1) by means of a symmetric cryptographic algorithm,
and in particular wherein the broadcast device (10) is configured to use a cryptographic nonce based on the header section of the data packet (D1), based on a time stamp, and based on a secret constant for encryption.

11. The broadcast device (1) of any of the preceding claims configured to, at each time $T_n$ with n being a positive natural number, generate the respective data packet (D1) in such a way that the data packet (D1)

- comprises, in particular in the header section of the data packet (D1), the respective current identifier ($ID1_n$) and a subsequent randomly obtained number ($RON_n$) which is later, at a time $T_{n+1}$, used for generating a subsequent updated current identifier ($ID1_{n+1}$) of the broadcast device (10), or
- comprises, in particular in the header section of the data packet (D1), the respective current identifier ($ID1_n$) and the randomly obtained number ($RON_{n-1}$) which was used for generating the current identifier ($ID1_n$) of the broadcast device (10).

12. The broadcast device (10) of any of the preceding claims configured to generate the data packet (D1) in such a way that the data packet (D1) comprises at least one of

- a timestamp, in particular in the payload section of the data packet,
- a packet protocol version, in particular in the header section of the data packet, and
- a maximum supported packet protocol version, in particular in the header section of the data packet.

13. The broadcast device (10) of any of the preceding claims configured to

- repeatedly determine an updated position (P1) of the broadcast device (10), and
- repeatedly generate and broadcast an updated data packet (D1) based on the updated position (P1) and based on the current identifier (ID1) which is currently valid,

and in particular wherein any time interval between two of such consecutive updates is between 0.1 s and 5 s, in particular is between 0.5 s and 1 s, and in particular is 1 s.

14. The broadcast device (10) of any of the preceding claims further comprising a radio receiver (14) configured to receive a foreign data packet (D2) as broadcasted from a foreign broadcast device (20), the foreign data packet (D2) being indicative of information pertaining to a second aircraft (2),
and in particular wherein the broadcast device (10) is configured to calculate a collision probability and/or visualize information indicative of a situational awareness between the first aircraft (1) and the second aircraft (2) based on the information pertaining to the first aircraft (1) and based on the received information pertaining to the second aircraft (2).

15. The broadcast device (10) of any of the preceding claims configured to generate the data packet (D1) in such a way that the data packet (D1) comprises a pair c = (e, m) with an exponent e being a natural number and with a mantissa m being a natural number,

wherein the pair c is indicative of a value v,
wherein the mantissa m has a bit width of $N_m$ and wherein the exponent e has a bit width of $N_e$,
wherein

$$v = 2^e * (2^{Nm} + m) - 2^{Nm}$$

and wherein the bit widths $N_m$ and $N_e$ are selected such that a total bit width $N=N_e+N_m$ of the pair c is smaller than a total bit width of the value v.

16. A method for, by means of a broadcast device (10), in particular of any one of the preceding claims, wirelessly broadcasting information pertaining to a first aircraft (1), the method comprising steps of:

- providing the broadcast device (10) comprising a positioning device (11), a control unit (12), and a radio transmitter (13),
- by means of the positioning device (11) determining a position (P1) of the broadcast device (10),
- by means of the control unit (12):

  * receiving the position (P1) as determined by the positioning device (11), and
  * generating a data packet (D1) comprising the received position (P1) or values indicative thereof, and

wherein the method comprises a further step of

- by means of the radio transmitter (13) receiving the generated data packet (D1) and wirelessly broadcasting the received data packet (D1),

wherein the broadcasted data packet (D1) is indicative of the to-be-broadcasted information,
**characterized in that** the method comprises a further step of, by means of the control unit (12):

* generating, at a time $T_k$ with k being a positive natural number, a current identifier ($ID1_k$) of the broadcast device (10) based on a randomly obtained number ($RON_{k-1}$) and based on a previous identifier ($ID1_{k-1}$) as previously, at a prior time $T_{k-1}$, generated by the control unit (12), and

**in that** the step of generating the data packet (D1) is performed such that the data packet (D1) comprises the generated current identifier ($ID1_k$) of the broadcast device (10) or values indicative thereof.

17. The method of claim 16 comprising a further step of:

- at a later time $T_{k+1}$, generating an updated current identifier ($ID1_{k+1}$) of the broadcast device (10) based on an updated randomly obtained number ($RON_k$) and based on the previous identifier ($ID1_k$) as previously generated by the control unit (12), wherein the previous identifier ($ID1_k$) immediately precedes the updated current identifier ($ID1_{k+1}$), and
- generating and broadcasting an updated data packet (D1) based on the generated updated current identifier ($ID1_{k+1}$)

18. The method of claim 17 comprising a further step of:

- at each time $T_n$ with n being a positive natural number, repeatedly generating the updated current identifier ($ID1_n$) of the broadcast device (10), and
- generating and broadcasting the respective updated data packet (D1) which is based on the updated current identifier ($ID1_n$) which is valid for the respective time $T_n$.

19. The method of claim 18 wherein any time interval $\Delta T_n = T_n - T_{n-1}$ between generations of two consecutive updated current identifiers ($ID1_{n-1}$, $ID1_n$) is between 1 s and 60 s, in particular is between 2 s and 10 s, and in particular is 10 s.

20. The method of any of the claims 16 to 19 comprising a further step of

- at each time $T_n$ with n being a positive natural number, for generating the respective current identifier ($ID1_n$), applying a cryptographic hash function, in particular deterministically mapping the respective randomly obtained number ($RON_{n-1}$) and the respective previous identifier ($ID1_{n-1}$) to the respective current identifier ($ID1_n$),

and in particular wherein the cryptographic hash function comprises at least one bitshifting operation and/or at least one XOR operation.

21. The method of any of the claims 16 to 20 comprising a further step of

- at each time $T_n$ with n being a positive natural number, for generating the respective current identifier ($ID1_n$), selecting the respective randomly obtained number ($RON_{n-1}$) from a range of 0 to ($2^{N_e}-1$) with $N_e$ being a positive natural number,

and in particular wherein $N_e$ is selected from a range of 2 to 8, and in particular wherein $N_e$ is 2.

22. The method of any of the claims 16 to 21 comprising a further step of

- at each time $T_n$ with n being a positive natural number, generating the respective data packet (D1) in such a way that the data packet (D1)

* comprises, in particular in the header section of the data packet (D1), the respective current identifier ($ID1_n$) and a subsequent randomly obtained number ($RON_n$) which is subsequently used for generating a subsequent updated current identifier ($ID1_{n+1}$) of the broadcast device (10), or
* comprises, in particular in the header section of the data packet (D1), the respective current identifier ($ID1_n$) and the randomly obtained number ($RON_{n-1}$) which was used for generating the current identifier ($ID1_n$) of the broadcast device (10).

23. A computer program product comprising instructions to cause a device of any of the claims 1 to 15 to execute the steps of a method of any of the claims 16 to 22.

24. A computer-readable medium having stored thereon the computer program product of claim 23.

25. A system for aircraft collision avoidance comprising

- a first broadcast device (10) of any of the claims 1 to 15 at a first aircraft (1) for wirelessly broadcasting information pertaining to the first aircraft (1), and
- a second broadcast device (20) of any of the claims 1 to 15 at a second aircraft (2) for wirelessly broadcasting information pertaining to the second aircraft (2).

**Patentansprüche**

1. Eine Sendevorrichtung (10) zum drahtlosen Aussenden von Informationen, die ein erstes Luftfahrzeug (1) betreffen, wobei die Sendevorrichtung (10) umfasst:

- eine Ortungsvorrichtung (11), die dazu ausgestaltet ist, eine Position (P1) der Sendevorrichtung (10) zu bestimmen,
- eine Steuereinheit (12), die dazu ausgestaltet ist:

* die von der Ortungsvorrichtung (11) bestimmte Position (P1) zu empfangen, und
* ein Datenpaket (D1) zu erzeugen, das die empfangene Position (P1) oder diese bezeichnende Werte enthält, und

wobei die Sendevorrichtung (10) weiterhin umfasst

- einen Funksender (13), der dazu ausgestaltet ist, das erzeugte Datenpaket (D1) zu empfangen und das empfangene Datenpaket (D1) drahtlos auszusenden,

wobei das ausgesendete Datenpaket (D1) bezeichnend für die auszusendende Information ist, **dadurch gekennzeichnet, dass** die Steuereinheit (12) dazu ausgestaltet ist, zu einem Zeitpunkt $T_k$, wobei k eine positive natürliche Zahl ist, eine aktuelle Kennung ($ID1_k$) der Sendevorrichtung (10) auf der Grundlage einer zufällig ermittelten Zahl ($RON_{k-1}$) und auf der Grundlage einer vorherigen Kennung ($ID1_{k-1}$) zu erzeugen, wie sie zuvor, zu einem früheren Zeitpunkt $T_{k-1}$, von der Steuereinheit (12) erzeugt wurde, und dass die Steuereinheit (12) dazu ausgestaltet ist, das Datenpaket (D1) so zu erzeugen, dass das Datenpaket (D1) die erzeugte aktuelle Kennung ($ID1_k$) der Sendevorrichtung (10) oder diese bezeichnende Werte umfasst.

2. Die Sendevorrichtung (10) nach Anspruch 1, dazu ausgestaltet, dass sie zu einem späteren Zeitpunkt $T_{k+1}$ eine aktualisierte aktuelle Kennung ($ID1_{k+1}$) der Sendevorrichtung (10) auf der Grundlage einer aktualisierten zufällig ermittelten Zahl ($RON_k$) und auf der Grundlage der vorherigen Kennung ($ID1_k$), wie sie zuvor von der Steuereinheit (12) erzeugt wurde, erzeugt, wobei die vorherige Kennung ($ID1_k$) der aktualisierten aktuellen Kennung ($ID1_{k+1}$) unmittelbar vorausgeht, und wobei die Sendevorrichtung (10) weiterhin dazu ausgestaltet ist, ein aktualisiertes Datenpaket (D1) auf der Grundlage der erzeugten aktualisierten aktuellen Kennung ($ID1_{k+1}$) zu erzeugen und auszusenden.

3. Die Sendevorrichtung (10) nach Anspruch 2, dazu ausgestaltet, dass sie zu jedem Zeitpunkt $T_n$, wobei n eine positive natürliche Zahl ist, wiederholt die aktualisierte aktuelle Kennung ($ID1_n$) der Sendevorrichtung (10) erzeugt, und wobei die Sendevorrichtung (10) weiterhin dazu ausgestaltet ist, das jeweilige aktualisierte Datenpaket (D1) zu erzeugen und auszusenden, das auf der aktualisierten aktuellen Kennung ($ID1_n$) basiert, die für den jeweiligen Zeitpunkt $T_n$ gültig ist.

4. Die Sendevorrichtung (10) nach Anspruch 3, wobei ein beliebiges Zeitintervall $\Delta T_n = T_n - T_{n-1}$ zwischen dem Erzeugen von zwei aufeinanderfolgenden aktualisierten aktuellen Kennungen ($ID1_{n-1}$, $ID1_n$) zwischen 1 s und 60 s, insbesondere zwischen 2 s und 10 s, und insbesondere 10 s beträgt.

5. Die Sendevorrichtung (10) nach einem der vorhergehenden Ansprüche, dazu ausgestaltet, dass sie zu jedem Zeitpunkt $T_n$, wobei n eine positive natürliche Zahl ist, zur Erzeugung der jeweiligen aktuellen Kennung ($ID1_n$) eine kryptographische Hash-Funktion anwendet, die insbesondere die jeweilige zufällig ermittelte Zahl ($RON_{n-1}$) und die jeweilige vorherige Kennung ($ID1_{n-1}$) deterministisch auf die jeweilige aktuelle Kennung ($ID1_n$) abbildet, und insbesondere wobei die kryptographische Hash-Funktion mindestens eine Bitverschiebungsoperation und/oder mindestens eine XOR-Operation umfasst.

6. Die Sendevorrichtung (10) nach einem der vorhergehenden Ansprüche, dazu ausgestaltet, dass sie zu jedem Zeitpunkt $T_n$, wobei n eine positive natürliche Zahl ist, zur Erzeugung der jeweiligen aktuellen Kennung ($ID1_n$) die jeweilige zufällig ermittelte Zahl ($RON_{n-1}$) aus einer vordefinierten endlichen Zahlenmenge zufällig auswählt.

7. Die Sendevorrichtung (10) nach einem der vorhergehenden Ansprüche, dazu ausgestaltet, dass sie zu jedem Zeitpunkt $T_n$, wobei n eine positive natürliche Zahl ist, zur Erzeugung der jeweiligen aktuellen Kennung ($ID1_n$) die jeweilige zufällig ermittelte Zahl ($RON_{n-1}$) aus einem Bereich von 0 bis ($2^{N_e}-1$) auswählt, wobei $N_e$ eine positive natürliche Zahl ist, und insbesondere wobei $N_e$ aus einem Bereich von 2 bis 8 ausgewählt ist, und insbesondere wobei $N_e$ 2 ist.

8. Die Sendevorrichtung (10) nach einem der vorhergehenden Ansprüche weiterhin umfassend einen Zufallszahlengenerator (16), der dazu ausgestaltet ist, dass er die zufällig ermittelte Zahl ($RON_{n-1}$) erzeugt, die zur Erzeugung der jeweiligen aktuellen Kennung ($ID1_n$) verwendet wird, und insbesondere wobei die Sendevorrichtung (10) dazu ausgestaltet ist, den Zufallszahlengenerator (16) zu initialisieren auf der Grundlage von mindestens einem Element der Gruppe bestehend aus

   - zumindest einem Teil der Position (P1),
   - einem Zeitstempel, und
   - einem von einem Sensor (17) der Sendevorrichtung (10) abgeleiteten Wert.

9. Die Sendevorrichtung (10) nach einem der vorhergehenden Ansprüche, dazu ausgestaltet, dass sie das Datenpaket (D1) derart erzeugt, dass das Datenpaket (D1) einen Header-Bereich und einen Nutzdatenbereich umfasst, und insbesondere wobei der Header-Bereich unverschlüsselt ist und/oder wobei der Nutzdatenbereich verschlüsselt ist.

10. Die Sendevorrichtung (10) nach Anspruch 9, dazu ausgestaltet, dass sie den Nutzdatenbereich des Datenpakets (D1) mit Hilfe eines symmetrischen kryptografischen Algorithmus verschlüsselt, und insbesondere wobei die Sendevorrichtung (10) dazu ausgestaltet ist, eine kryptographische Nonce auf der Grundlage des Header-Bereichs des Datenpakets (D1), auf der Grundlage eines Zeitstempels und auf der Grundlage einer geheimen Konstante zur Verschlüsselung zu verwenden.

11. Die Sendevorrichtung (1) nach einem der vorhergehenden Ansprüche, dazu ausgestaltet, dass sie zu jedem Zeitpunkt $T_n$, wobei n eine positive natürliche Zahl ist, das jeweilige Datenpaket (D1) so erzeugt, dass das Datenpaket (D1)

   - insbesondere im Header-Bereich des Datenpakets (D1) die jeweilige aktuelle Kennung ($ID1_n$) und eine nachfolgende zufällig ermittelte Zahl ($RON_n$) umfasst, die später, zu einem Zeitpunkt $T_{n+1}$, zur Erzeugung einer nachfolgenden aktualisierten aktuellen Kennung ($ID1_{n+1}$) der Sendevorrichtung (10) verwendet wird, oder
   - insbesondere im Header-Bereich des Datenpakets (D1) die jeweilige aktuelle Kennung ($ID1_n$) und die zufällig ermittelte Zahl ($RON_{n-1}$) umfasst, die zur Erzeugung der aktuellen Kennung ($ID1_n$) der Sendevorrichtung (10) verwendet wurde.

12. Die Sendevorrichtung (10) nach einem der vorhergehenden Ansprüche, dazu ausgestaltet, dass sie das Datenpaket (D1) so erzeugt, dass das Datenpaket (D1) mindestens eines der folgenden Elemente umfasst

   - einen Zeitstempel, insbesondere im Nutzdatenbereich des Datenpakets,
   - eine Paketprotokollversion, insbesondere im Header-Bereich des Datenpakets, und
   - eine maximal unterstützte Paketprotokollversion, insbesondere im Header-Bereich des Datenpakets.

**13.** Die Sendevorrichtung (10) nach einem der vorhergehenden Ansprüche, dazu ausgestaltet,

- wiederholt eine aktualisierte Position (P1) der Sendevorrichtung (10) zu bestimmen, und
- wiederholt ein aktualisiertes Datenpaket (D1) auf der Grundlage der aktualisierten Position (P1) und der aktuellen Kennung (ID1), die derzeit gültig ist, zu erzeugen und auszusenden,

und insbesondere, wobei jedes Zeitintervall zwischen zwei dieser aufeinanderfolgenden Aktualisierungen zwischen 0.1 s und 5 s, insbesondere zwischen 0.5 s und 1 s und insbesondere 1 s beträgt.

**14.** Die Sendevorrichtung (10) nach einem der vorhergehenden Ansprüche weiterhin umfassend einen Funkempfänger (14), der dazu ausgestaltet ist, dass er ein externes Datenpaket (D2) empfängt, das von einer externen Sendevorrichtung (20) ausgesendet wird, wobei das externe Datenpaket (D2) für Informationen bezeichnend ist, die ein zweites Luftfahrzeug (2) betreffen,
und insbesondere wobei die Sendevorrichtung (10) dazu ausgestaltet ist, eine Kollisionswahrscheinlichkeit zu berechnen und/oder Informationen zu visualisieren, die für eine Situationswahrnehmung zwischen dem ersten Luftfahrzeug (1) und dem zweiten Luftfahrzeug (2) bezeichnend sind, basierend auf den Informationen, die das erste Luftfahrzeug (1) betreffen, und basierend auf den empfangenen Informationen, die das zweite Luftfahrzeug (2) betreffen.

**15.** Die Sendevorrichtung (10) nach einem der vorhergehenden Ansprüche, dazu ausgestaltet, dass sie das Datenpaket (D1) so erzeugt, dass das Datenpaket (D1) ein Paar c = (e, m) mit einem Exponenten e, der eine natürliche Zahl ist, und mit einer Mantisse m, die eine natürliche Zahl ist, umfasst,

wobei das Paar c bezeichnend für einen Wert v ist,
wobei die Mantisse m eine Bitbreite von $N_m$ hat und wobei der Exponent e eine Bitbreite von $N_e$ hat,
wobei

$$v = 2^e * (2^{Nm} + m) - 2^{Nm}$$

und wobei die Bitbreiten $N_m$ und $N_e$ so gewählt sind, dass eine Gesamtbitbreite $N = N_e + N_m$ des Paares c kleiner ist als eine Gesamtbitbreite des Wertes v.

**16.** Ein Verfahren zum drahtlosen Aussenden von Informationen, die ein erstes Luftfahrzeug (1) betreffen, mittels einer Sendevorrichtung (10), insbesondere nach einem der vorhergehenden Ansprüche, wobei das Verfahren die folgenden Schritte umfasst:

- Bereitstellen der Sendevorrichtung (10) mit einer Ortungsvorrichtung (11), einer Steuereinheit (12) und einem Funksender (13),
- mit Hilfe der Ortungsvorrichtung (11) Bestimmen einer Position (P1) der Sendevorrichtung (10),
- mit Hilfe der Steuereinheit (12):

  * Empfangen der von der Ortungsvorrichtung (11) bestimmten Position (P1), und
  * Erzeugen eines Datenpakets (D1), das die empfangene Position (P1) oder diese bezeichnende Werte enthält, und

wobei das Verfahren einen weiteren Schritt umfasst:

- mit Hilfe des Funksenders (13) Empfangen des erzeugten Datenpaket (D1) und drahtlose Aussendung des empfangenen Datenpakets (D1),

wobei das ausgesendete Datenpaket (D1) bezeichnend für die auszusendende Information ist,
**dadurch gekennzeichnet, dass** das Verfahren einen weiteren Schritt umfasst, mit Hilfe der Steuereinheit (12)

  * Erzeugen einer aktuellen Kennung ($ID1_k$) der Sendevorrichtung (10) zu einem Zeitpunkt $T_k$, wobei k eine positive natürliche Zahl ist, auf der Grundlage einer zufällig ermittelten Zahl ($RON_{k-1}$) und auf der Grundlage einer vorherigen Kennung ($ID1_{k-1}$), wie sie zuvor, zu einem früheren Zeitpunkt $T_{k-1}$, von der Steuereinheit (12) erzeugt wurde, und

dass der Schritt des Erzeugens des Datenpakets (D1) so durchgeführt wird, dass das Datenpaket (D1) die erzeugte aktuelle Kennung ($ID1_k$) der Sendevorrichtung (10) oder diese bezeichnende Werte umfasst.

**17.** Das Verfahren nach Anspruch 16, umfassend einen weiteren Schritt:

- zu einem späteren Zeitpunkt $T_{k+1}$, Erzeugen einer aktualisierten aktuellen Kennung ($ID1_{k+1}$) der Sendevorrichtung (10) auf der Grundlage einer aktualisierten zufällig ermittelten Zahl ($RON_k$) und auf der Grundlage der vorherigen Kennung ($ID1_k$), wie sie zuvor von der Steuereinheit (12) erzeugt wurde, wobei die vorherige Kennung ($ID1_k$) der aktualisierten aktuellen Kennung ($ID1_{k+1}$) unmittelbar vorausgeht, und
- Erzeugen und Aussenden eines aktualisierten Datenpakets (D1) auf der Grundlage der erzeugten aktualisierten aktuellen Kennung ($ID1_{k+1}$).

**18.** Das Verfahren nach Anspruch 17 umfassend einen weiteren Schritt:

- zu jedem Zeitpunkt $T_n$, wobei n eine positive natürliche Zahl ist, wiederholtes Erzeugen der aktualisierten aktuellen Kennung ($ID1_n$) der Sendevorrichtung (10), und
- Erzeugen und Aussenden des jeweiligen aktualisierten Datenpakets (D 1), das auf der aktualisierten aktuellen Kennung ($ID1_n$) basiert, die für den jeweiligen Zeitpunkt $T_n$ gültig ist.

**19.** Das Verfahren nach Anspruch 18, wobei ein beliebiges Zeitintervall $\Delta T_n = T_n - T_{n-1}$ zwischen dem Erzeugen von zwei aufeinanderfolgenden aktualisierten aktuellen Kennungen ($ID1_{n-1}$, $ID1_n$) zwischen 1 s und 60 s, insbesondere zwischen 2 s und 10 s, und insbesondere 10 s beträgt.

**20.** Das Verfahren nach einem der Ansprüche 16 bis 19, umfassend einen weiteren Schritt:

- zu jedem Zeitpunkt $T_n$, wobei n eine positive natürliche Zahl ist, zur Erzeugung der jeweiligen aktuellen Kennung ($ID1_n$) Anwenden einer kryptographischen Hash-Funktion, die insbesondere die jeweilige zufällig ermittelte Zahl ($RON_{n-1}$) und die jeweilige vorherige Kennung ($ID1_{n-1}$) deterministisch auf die jeweilige aktuelle Kennung ($ID1_n$) abbildet,

und insbesondere wobei die kryptographische Hash-Funktion mindestens eine Bitverschiebungsoperation und/oder mindestens eine XOR-Operation umfasst.

**21.** Das Verfahren nach einem der Ansprüche 16 bis 20, umfassend einen weiteren Schritt:

- zu jedem Zeitpunkt $T_n$, wobei n eine positive natürliche Zahl ist, zum Erzeugen der jeweiligen aktuellen Kennung ($ID1_n$), Auswählen der jeweiligen zufällig ermittelten Zahl ($RON_{n-1}$) aus einem Bereich von 0 bis ($2^{N_e}-1$), wobei $N_e$ eine positive natürliche Zahl ist,

und insbesondere wobei $N_e$ aus einem Bereich von 2 bis 8 ausgewählt ist, und insbesondere wobei $N_e$ 2 ist.

**22.** Das Verfahren nach einem der Ansprüche 16 bis 21, umfassend einen weiteren Schritt:

- zu jedem Zeitpunkt $T_n$, wobei n eine positive natürliche Zahl ist, Erzeugen des jeweiligen Datenpakets (D1) derart, dass das Datenpaket (D1)

* insbesondere im Header-Bereich des Datenpakets (D1) die jeweilige aktuelle Kennung ($ID1_n$) und eine nachfolgende zufällig ermittelte Zahl ($RON_n$) umfasst, die anschließend zur Erzeugung einer nachfolgenden aktualisierten aktuellen Kennung ($ID1_{n+1}$) der Sendevorrichtung (10) verwendet wird, oder
* insbesondere im Header-Bereich des Datenpakets (D1) die jeweilige aktuelle Kennung ($ID1_n$) und die zufällig ermittelte Zahl ($RON_{n-1}$), umfasst, die zur Erzeugung der aktuellen Kennung ($ID1_n$) der Sendevorrichtung (10) verwendet wurde.

**23.** Ein Computerprogrammprodukt, das Anweisungen enthält, um eine Vorrichtung nach einem der Ansprüche 1 bis 15 zu veranlassen, die Schritte eines Verfahrens nach einem der Ansprüche 16 bis 22 auszuführen.

**24.** Ein computerlesbares Medium, auf dem das Computerprogrammprodukt nach Anspruch 23 gespeichert ist.

**25.** Ein System zur Kollisionsvermeidung von Luftfahrzeugen mit

- einer ersten Sendevorrichtung (10) nach einem der Ansprüche 1 bis 15 an einem ersten Luftfahrzeug (1) zur drahtlosen Aussendung von Informationen, die das erste Luftfahrzeug (1) betreffen, und
- einer zweiten Sendevorrichtung (20) nach einem der Ansprüche 1 bis 15 an einem zweiten Luftfahrzeug (2) zur drahtlosen Aussendung von Informationen, die das zweite Luftfahrzeug (2) betreffen.

**Revendications**

**1.** Dispositif de diffusion (10) pour diffuser sans fil des informations relatives à un premier aéronef (1), le dispositif de diffusion (10) comprenant :

- un dispositif de positionnement (11) configuré pour déterminer une position (P1) du dispositif de diffusion (10),
- une unité de commande (12) configurée pour :

* recevoir la position (P1) telle que déterminée par le dispositif de positionnement (11), et
* générer un paquet de données (D1) comprenant la position reçue (P1) ou des valeurs indicatives de celle-ci, et

dans lequel le dispositif de diffusion (10) comprend en outre

- un émetteur radio (13) configuré pour recevoir le paquet de données généré (D1) et diffuser sans fil le paquet de données reçu (D1),

le paquet de données diffusé (D1) indique les informations à diffuser,
**caractérisé en ce que** l'unité de commande (12) est configurée pour générer, à un temps $T_k$, k étant un nombre naturel positif, un identifiant courant ($ID1_k$) du dispositif de diffusion (10) sur la base d'un nombre ($RON_{k-1}$) obtenu de manière aléatoire et sur la base d'un identifiant précédent ($ID1_{k-1}$) tel que précédemment généré, à un temps antérieur $T_{k-1}$, par l'unité de commande (12), et
l'unité de commande (12) est configurée pour générer le paquet de données (D1) de sorte que le paquet de données (D1) comprenne l'identifiant courant généré ($ID1_k$) du dispositif de diffusion (10) ou des valeurs indicatives de celui-ci.

**2.** Le dispositif de diffusion (10) de la revendication 1 configuré pour générer, à un temps ultérieur $T_{k+1}$, un identifiant courant mis à jour ($ID1_{k+1}$) du dispositif de diffusion (10) sur la base d'un nombre obtenu au hasard mis à jour ($RON_k$) et sur la base de l'identifiant précédent ($ID1_k$) tel que précédemment généré par l'unité de contrôle (12), dans lequel l'identifiant précédent ($ID1_k$) précède immédiatement l'identifiant courant mis à jour ($ID1_{k+1}$) et le dispositif de diffusion (10) est en outre configuré pour générer et diffuser un paquet de données mis à jour (D1) sur la base de l'identifiant courant mis à jour généré ($ID1_{k+1}$).

**3.** Le dispositif de diffusion (10) de la revendication 2 configuré pour générer, à chaque instant $T_n$, n étant un nombre naturel positif, de manière répétée l'identifiant courant mis à jour ($ID1_n$) du dispositif de diffusion (10), et le dispositif de diffusion (10) est en outre configuré pour générer et diffuser le paquet de données mis à jour (D1) sur la base de l'identifiant courant mis à jour ($ID1_n$) qui est valide pour le temps $T_n$ respectif.

**4.** Le dispositif de diffusion (10) de la revendication 3 dans lequel tout intervalle de temps $\Delta T_n = T_n - T_{n-1}$ entre les générations de deux identifiants courants mis à jour consécutifs ($ID1_{n-1}$, $ID1_n$) est compris entre 1 s et 60 s, en particulier entre 2 s et 10 s, et en particulier est de 10 s.

**5.** Le dispositif de diffusion (10) de l'une des revendications précédentes, configuré pour générer, à chaque instant $T_n$, n étant un nombre naturel positif, l'identifiant courant respectif ($ID1_n$), appliquer une fonction de hachage cryptographique, en particulier pour mettre en correspondance de manière déterministe le nombre obtenu de manière aléatoire ($RON_{n-1}$) et l'identifiant précédent respectif ($ID1_{n-1}$) avec l'identifiant courant respectif ($ID1_n$), et en particulier dans lequel la fonction de hachage cryptographique comprend au moins une opération de décalage de bits et/ou au moins une opération XOR.

**6.** Le dispositif de diffusion (10) de l'une des revendications précédentes est configuré pour, à chaque instant $T_n$, n

étant un nombre naturel positif, pour générer l'identifiant courant respectif ($ID1_n$), sélectionner au hasard le nombre obtenu au hasard respectif ($RON_{n-1}$) à partir d'un ensemble fini prédéfini de nombres.

7. Le dispositif de diffusion (10) de l'une des revendications précédentes, configuré pour générer, à chaque instant $T_n$, n étant un nombre naturel positif, l'identifiant courant respectif ($ID1_n$), sélectionner le nombre aléatoire respectif ($RON_{n-1}$) dans une plage de 0 à ($2^{Ne}-1$), Ne étant un nombre naturel positif,
et en particulier dans lequel Ne est choisi dans un intervalle de 2 à 8, et en particulier dans lequel Ne est 2.

8. Le dispositif de diffusion (10) de l'une des revendications précédentes, comprenant en outre un générateur de nombres aléatoires (16) configuré pour générer le nombre obtenu de manière aléatoire ($RON_{n-1}$) utilisé pour générer l'identifiant courant respectif ($ID1_n$),
et en particulier dans lequel le dispositif de diffusion (10) est configuré pour initialiser le générateur de nombres aléatoires (16) sur la base d'au moins l'un des groupes suivants

   - au moins une partie de la position (P1),
   - un horodatage, et
   - une valeur dérivée d'un capteur (17) de l'appareil de diffusion (10).

9. Le dispositif de diffusion (10) de l'une des revendications précédentes, configuré pour générer le paquet de données (D1) de manière à ce que le paquet de données (D1) comprenne une section d'en-tête et une section de données utiles, et en particulier dans lequel la section d'en-tête n'est pas cryptée et/ou dans lequel la section de données utiles est cryptée.

10. Le dispositif de diffusion (10) de la revendication 9, configuré pour crypter la section des données utiles du paquet de données (D1) au moyen d'un algorithme cryptographique symétrique,
et en particulier dans lequel le dispositif de diffusion (10) est configuré pour utiliser un nonce cryptographique sur la base de la section d'en-tête du paquet de données (D1), un horodatage et une constante secrète pour le cryptage.

11. Le dispositif de diffusion (1) de l'une des revendications précédentes, configuré pour générer, à chaque instant $T_n$, n étant un nombre naturel positif, le paquet de données respectif (D1) de manière à ce que le paquet de données (D1)

   - comprenne, en particulier dans la section d'en-tête du paquet de données (D1), l'identifiant courant respectif ($ID1_n$) et un nombre obtenu de manière aléatoire ($RONn$) qui sera utilisé ultérieurement, à un temps $T_{n+1}$, pour générer un identifiant courant mis à jour ($ID1_{n+1}$) du dispositif de diffusion (10), ou
   - comprenne, en particulier dans la section d'en-tête du paquet de données (D1), l'identifiant courant respectif ($ID1_n$) et le numéro obtenu de manière aléatoire ($RON_{n-1}$) qui a été utilisé pour générer l'identifiant courant ($ID1_n$) de l'appareil de diffusion (10).

12. Le dispositif de diffusion (10) de l'une des revendications précédentes, configuré pour générer le paquet de données (D1) de manière à ce que le paquet de données (D1) comprenne au moins l'un des éléments suivants

   - un horodatage, en particulier dans la section des données utiles du paquet de données,
   - une version du protocole du paquet, en particulier dans la section d'en-tête du paquet de données, et
   - une version de protocole de paquet maximale prise en charge, en particulier dans la section d'en-tête du paquet de données.

13. Le dispositif de diffusion (10) de l'une des revendications précédentes configuré pour

   - déterminer de manière répétée une position mise à jour (P1) de l'appareil de diffusion (10), et
   - générer et diffuser à plusieurs reprises un paquet de données mis à jour (D1) sur la base de la position mise à jour (P1) et de l'identifiant courant (ID1) qui est actuellement valide,

   et en particulier dans lequel tout intervalle de temps entre deux de ces mises à jour consécutives est compris entre 0,1 s et 5 s, en particulier entre 0,5 s et 1 s, et en particulier est de 1 s.

14. Le dispositif de diffusion (10) de l'une quelconque des revendications précédentes, comprenant en outre un récepteur radio (14) configuré pour recevoir un paquet de données étranger (D2) diffusé par un dispositif de diffusion étranger (20), le paquet de données étranger (D2) indiquant des informations relatives à un second aéronef (2),

et en particulier dans lequel le dispositif de diffusion (10) est configuré pour calculer une probabilité de collision et/ou visualiser des informations indiquant la situation entre le premier aéronef (1) et le second aéronef (2), sur la base des informations relatives au premier aéronef (1) et sur la base des informations reçues relatives au second aéronef (2).

**15.** Le dispositif de diffusion (10) de l'une des revendications précédentes, configuré pour générer le paquet de données (D1) de telle sorte que le paquet de données (D1) comprenne une paire c = (e, m) avec un exposant e, qui est un nombre naturel, et avec une mantisse m, qui est un nombre naturel,

dans lequel la paire c est indicative d'une valeur v,
dans lequel la mantisse m a une largeur de bit de Nm et dans lequel l'exposant e a une largeur de bit de Ne
dans lequel

$$v = 2^e * (2^{Nm} + m) - 2^{Nm}$$

et dans lequel les largeurs de bits Nm et Ne sont sélectionnées de telle sorte qu'une largeur de bit totale N=Ne+Nm de la paire c est inférieure à une largeur de bit totale de la valeur v.

**16.** Procédé pour diffuser sans fil, au moyen d'un dispositif de diffusion (10), en particulier de l'une quelconque des revendications précédentes, des informations relatives à un premier aéronef (1), le procédé comprenant les étapes suivantes

- fournir le dispositif de diffusion (10) comprenant un dispositif de positionnement (11), une unité de commande (12) et un émetteur radio (13),
- déterminer, au moyen du dispositif de positionnement (11), une position (P1) de l'appareil de diffusion (10),
- au moyen de l'unité de commande (12) :

    * recevoir la position (P1) telle que déterminée par le dispositif de positionnement (11), et
    * générer un paquet de données (D1) comprenant la position reçue (P1) ou des valeurs indicatives de celle-ci, et

dans lequel le procédé comprend une étape supplémentaire consistant à

- au moyen de l'émetteur radio (13), recevoir le paquet de données généré (D1) et diffuser sans fil le paquet de données reçu (D1),

dans lequel le paquet de données diffusé (D1) indique les informations à diffuser,
**caractérisé en ce que** le procédé comprend une étape supplémentaire consistant, au moyen de l'unité de commande (12) :

    * à générer, à un temps $T_k$, k étant un nombre naturel positif, un identifiant courant ($ID1_k$) du dispositif de diffusion (10) sur la base d'un nombre obtenu de manière aléatoire ($RON_{k-1}$) et sur la base d'un identifiant précédent ($ID1_{k-1}$) tel que généré précédemment, à un temps $T_{k-1}$, par l'unité de contrôle (12), et

**en ce que** l'étape de génération du paquet de données (D1) est réalisée de telle sorte que le paquet de données (D1) comprenne l'identifiant courant généré ($ID1_k$) du dispositif de diffusion (10) ou des valeurs indicatives de celui-ci.

**17.** La méthode de la revendication 16 comprenant une étape supplémentaire consistant à :

- générer, à un temps ultérieur $T_{k+1}$, un identifiant courant mis à jour ($ID1_{k+1}$) de l'appareil de diffusion (10) sur la base d'un numéro aléatoire mis à jour ($RON_k$) et sur la base de l'identifiant précédent ($ID1_k$) tel que précédemment généré par l'unité de commande (12), dans lequel l'identifiant précédent ($ID1_k$) précède immédiatement l'identifiant courant mis à jour ($ID1_{k+1}$), et
- générer et diffuser un paquet de données mis à jour (D1) sur la base de l'identifiant courant mis à jour généré ($ID1_{k+1}$).

**18.** La méthode de la revendication 17 comprend une étape supplémentaire consistant à :

- générer, à chaque instant $T_n$, n étant un nombre naturel positif, de manière répétée l'identifiant courant mis à jour ($ID1_n$) de l'appareil de diffusion (10), et
- générer et diffuser le paquet de données mis à jour (D1) sur la base de l'identifiant courant mis à jour ($ID1_n$) qui est valide pour le temps $T_n$ respectif.

**19.** Méthode de la revendication 18, dans lequel tout intervalle de temps $\Delta T_n = T_n - T_{n-1}$ entre les générations de deux identifiants courants mis à jour consécutifs ($ID1_{n-1}$, $ID1_n$) est compris entre 1 s et 60 s, en particulier entre 2 s et 10 s, et en particulier est de 10 s.

**20.** La méthode de l'une des revendications 16 à 19, comprenant une étape supplémentaire consistant à :

- à chaque instant $T_n$, n étant un nombre naturel positif, pour générer l'identifiant courant respectif ($ID1_n$), appliquer une fonction de hachage cryptographique, en particulier en mettant en correspondance de manière déterministe le nombre obtenu de manière aléatoire ($RON_{n-1}$) et l'identifiant précédent respectif ($ID1_{n-1}$) avec l'identifiant courant respectif ($ID1_n$),

et en particulier dans lequel la fonction de hachage cryptographique comprend au moins une opération de décalage de bits et/ou au moins une opération XOR.

**21.** La méthode de l'une des revendications 16 à 20, comprenant une étape supplémentaire consistant à :

- générer, à chaque instant $T_n$, n étant un nombre naturel positif, l'identifiant courant respectif ($ID1_n$), sélectionner le nombre aléatoire respectif ($RON_{n-1}$) dans une fourchette de 0 à ($2^{Ne}_{-1}$), Ne étant un nombre naturel positif,

et en particulier dans lequel Ne est choisi dans une gamme de 2 à 8, et en particulier dans lequel Ne est 2.

**22.** La méthode de l'une des revendications 16 à 21, comprenant une étape supplémentaire consistant à :

- générer, à chaque instant $T_n$, n étant un nombre naturel positif, le paquet de données respectif (D1) de manière à ce que le paquet de données (D1)

* comprenne, en particulier dans la section d'en-tête du paquet de données (D1), l'identifiant courant respectif ($ID1_n$) et un numéro obtenu de manière aléatoire (RONn) qui est ensuite utilisé pour générer un identifiant courant mis à jour ($ID1_{n+1}$) du dispositif de diffusion (10), ou
* comprenne, en particulier dans la section d'en-tête du paquet de données (D1), l'identifiant courant ($ID1_n$) et le numéro obtenu au hasard ($RON_{n-1}$) qui a été utilisé pour générer l'identifiant courant ($ID1_n$) du dispositif de diffusion (10).

**23.** Produit de programme d'ordinateur comprenant des instructions pour faire en sorte qu'un dispositif de l'une des revendications 1 à 15 exécute les étapes d'une méthode de l'une des revendications 16 à 22.

**24.** Support lisible par ordinateur sur lequel est stocké le produit de programme d'ordinateur de la revendication 23.

**25.** Système d'évitement des collisions d'aéronefs comprenant

- un premier dispositif de diffusion (10) de l'une des revendications 1 à 15, à un premier aéronef (1), pour diffuser sans fil des informations relatives au premier aéronef (1), et
- un second dispositif de diffusion (20) selon l'une des revendications 1 à 15, à un second aéronef (2), pour diffuser sans fil des informations relatives au second aéronef (2).

Quantization Step

Fig. 1b

Avg. Quantization Error %

Fig. 1c

Fig. 1a

Fig. 7

Fig. 2

Fig. 3

a)

Leading bits truncated at given latitude

b)

Longitudinal grid width at given latitude

c)

Longitudinal resolution at a given latitude

**Fig. 4**

**Fig. 5**

GPS

GPS

GPS

D2(P2, ID2)

D1(P1, ID1)

P2

20

1

P1

2

10

**Fig. 6**

**REFERENCES CITED IN THE DESCRIPTION**

**Patent documents cited in the description**

- US 20190149322 A1

- US 20170318213 A1

**Non-patent literature cited in the description**

- SAT: Security in the air using Tesla. **BERTHIER PAUL et al.** 2017 IEEE/AIAA 36TH DIGITAL AVIONICS SYSTEMS CONFERENCE (DASC). IEEE, 17 September 2017, 1-10